(19) **Europäisches Patentamt**
**European Patent Office**
**Office européen des brevets**

(11) **EP 2 336 905 A1**

(12) **EUROPEAN PATENT APPLICATION**
published in accordance with Art. 153(4) EPC

(43) Date of publication:
**22.06.2011 Bulletin 2011/25**

(51) Int Cl.:
**G06F 17/30** (2006.01)

(21) Application number: **09809240.6**

(22) Date of filing: **26.08.2009**

(86) International application number:
**PCT/CN2009/073534**

(87) International publication number:
**WO 2010/022655 (04.03.2010 Gazette 2010/09)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **26.08.2008 CN 200810142177
15.12.2008 CN 200810187004
15.12.2008 CN 200810187049
15.12.2008 CN 200810187020
15.12.2008 CN 200810187019**

(71) Applicant: **Huawei Technologies Co., Ltd.
Longgang District, Shenzhen
Guangdong 518129 (CN)**

(72) Inventor: **HU, Hanqiang
Longgang District 518129, Shenzhen (CN)**

(74) Representative: **Kreuz, Georg Maria et al
Huawei Technologies Duesseldorf GmbH
Dessauerstrasse 3
80992 München (DE)**

(54) **A SEARCHING METHOD AND SYSTEM**

(57) A search method provides a search client user with personalized search that may provide related search results according to the interest model of the search client user. The search method includes: receiving a search request from a search client, where the search request includes one or more search key words; extracting an interest model of a user according to the personalized data of the user; distributing the one or more search key words and the interest model to one or more member search devices; receiving search results and corresponding ranking scores of the search results from the one or more member search devices, where the ranking scores are calculated according to the interest model; and sorting the search results according to the ranking scores, obtaining final search results, and returning the final search results to the search client. A search system is also provided. With the present invention, the search results are more personalized, and the search service may be promoted more conveniently.

FIG. 7

**Description**

This application claims priority to Chinese Patent Application No. 200810142177.X, filed with the Chinese Patent Office on August 26, 2008 and entitled "Search Method and System", Chinese Patent Application No. 200810187004.X, filed with the Chinese Patent Office on December 15, 2008 and entitled "Search Method and System", Chinese Patent Application No. 200810187020.9, filed with the Chinese Patent Office on December 15, 2008 and entitled "Search Method and System", Chinese Patent Application No. 200810187019.6, filed with the Chinese Patent Office on December 15, 2008 and entitled "Search Method and System", and Chinese Patent Application No. 200810187049.7, filed with the Chinese Patent Office on December 15, 2008 and entitled "Search Method and System", which are incorporated herein by reference in their entirety.

**FIELD OF THE INVENTION**

The present invention relates to the communication field, and in particular, to a search method and system.

**BACKGROUND OF THE INVENTION**

With the development and progress of science, communication technologies also witness rapid development. Mobile search is a new highlight along with the development of communication technologies. The research on mobile search technologies also becomes a focus in this field. Traditional mobile search technologies largely depend on key words input by a user, and provide the user with related search results according to the key words input by the user. During the implementation of the present invention, the inventor discovers the following problems in the prior art: In the current Internet field, hundreds of thousands of search results may be obtained by using the key words of the user; the search results provided to the user may not satisfy the search requirements of the user.

**SUMMARY OF THE INVENTION**

The present invention provides a search method to overcome the problem that the search results cannot properly satisfy the requirements of a user in the prior art.

The present invention provides also a computer readable storage medium, a search device, and a search system.

A search method provides a search client user with personalized search that may provide related search results according to the interest model of the search client user. The search method may include: receiving a search request from a search client, where the search request includes one or more search key words; extracting an interest model of a user according to the personalized data of the user; distributing the one or more search key words and the interest model to one or more member search devices; receiving search results and corresponding ranking scores of the search results from the one or more member search devices, where the ranking scores are calculated according to the interest model; and obtaining final search results by sorting the search results according to the ranking scores, and returning the final search results to the search client.

The search method may further include: receiving a search request from a search client, where the search request includes one or more search key words and a user ID; distributing the one or more key words and the user ID to one or more member search devices; receiving search results from the one or more member search devices, where the search results are obtained by the one or more member search devices according to an interest model that is extracted according to the personalized data of a user; and sending the search results to the search client.

The search method may also include: receiving a search request that includes one or more key words; searching according to the one or more key words; ranking and sorting search results according to an interest model that is extracted according to the personalized data of a user; and returning the sorted search results.

The search method may additionally include: receiving a search request from a search client, where the search request includes one or more search key words; distributing the one or more search key words to a search device; receiving search results from the search device; extracting an interest model of a user according to the personalized data of the user, and calculating ranking scores of the search results according to the interest model; sorting the search results according to the ranking scores; and sending the sorted search results to the search client.

A computer readable storage medium includes a computer program that may enable one or more processors to execute the following steps when the computer program runs: receiving a search request from a search client, where the search request includes one or more search key words; extracting an interest model of a user according to the personalized data of the user; searching according to the one or more search key words, and performing relevance sorting on search results according to the interest model; and sending the sorted search results to the search client.

A search device includes: a tool adapted to receive a search request; a tool adapted to extract an interest model of a user according to the personalized data of the user; a tool adapted to distribute the request and the interest model to member search devices; a tool adapted to receive search results and ranking scores of the search results from the member search devices; a tool adapted to sort the search results according to the ranking scores; and a tool adapted to return the search results to the search client.

The search device may further include: a tool adapted to receive a search request from a search client; a tool adapted to extract an interest model of a user according to the personalized data of the user; a tool adapted to perform relevance sorting on search results that are obtained according to the interest model; and a tool adapted to send the search results to the search client.

The search device may also include: a tool adapted to receive a search request; a tool adapted to obtain search results according to an interest model of a user that is extracted according to the personalized data of the user and the search request; and a tool adapted to return the search results.

A search system includes a search server that may establish search communications with one or more member search devices. The search server is adapted to: receive a search request from a search client, distribute the search request to the one or more member search devices, and receive search results returned by the one or more member search devices. The one or more member search devices are adapted to obtain the search results according to the search request. The search server or the one or more member search devices may also be configured to: extract an interest model according to the user data, calculate ranking scores of the search results according to the interest model, and perform relevance sorting on the search results.

The search system may further include a search server that may establish search communications with one or more member search devices. The search server is adapted to: receive a search request from a search client, extract an interest model of a user according to the personalized data of the user, distribute the search request and the interest model to the one or more member search devices, receive search results and ranking scores of the search results returned by the one or more member search devices, sort the search results according to the ranking scores, and return the sorted search results to the search client. The one or more member search devices are adapted to obtain the search results according to the search request, and calculate the ranking scores of the search results according to the interest model.

A search method includes: receiving a search request that includes one or more search key words; distributing the one or more search key words to a search device; after returning search results, sorting the search results according to ranking scores of the search results calculated according to an interest model of a user that is extracted according to the personalized data of the user; and returning the sorted search results.

According to the first aspect of the present invention a search method includes in a first implementation form: receiving a search request; carrying an interest model of a user in the search request, and distributing the search request to a search device; and receiving personalized search results obtained according to the interest model from the search device, and returning the personalized search results.

The search method according to the first aspect of the present invention includes in a second implementation form: receiving a search request from a search client; extracting an interest model of a user according to the personalized data of the user or taking out a pre-stored interest model of the user; carrying the interest model of the user in the search request, and sending the search request to a search server; receiving personalized search results obtained according to the interest model of the user from the search server; and returning the personalized search results to the search client.

The search method may further include: receiving a search request and an interest model of a user; obtaining search results according to the search request; personalizing the search results according to the interest model of the user; and returning the personalized search results.

A search device includes: a tool adapted to receive a search request; a tool adapted to distribute the search request to a search device; a tool adapted to receive search results from the search device; a tool adapted to calculate ranking scores of the search results according to an interest model of a user that is extracted according to the personalized data of the user; a tool adapted to sort the search results according to the ranking scores; and a tool adapted to return the sorted search results.

The search device may further include: a tool adapted to receive a search request; a tool adapted to carry an interest model of a user in the search request, and distribute the search request to a search device; a tool adapted to receive personalized search results obtained according to the interest model from the search device; and a tool adapted to return the personalized search results.

According to the second aspect of the present invention a search device includes: a tool adapted to receive a search request from a search client; a tool adapted to extract an interest model of a user according to the personalized data of the user or take out a pre-stored interest model of the user; a tool adapted to carry the interest model of the user in the search request, and send the search request to a search server; a tool adapted to receive personalized search results obtained according to the interest model of the user from the search server; and a tool adapted to return the personalized search results to the search client.

The search device may also include: a search request receiving module, adapted to receive a search request and an interest model of a user; a search processing module, adapted to obtain search results according to the search request; a search result personalizing module, adapted to personalize the search results according to the interest model of the user; and a search result returning module, adapted to return the personalized search results.

A search system includes a search server that may establish search communications with one or more member search devices. The search server is adapted to: receive a search request, carry an interest model of a user in the search request, and distribute the search request to the one or more member search devices. The one or more member search devices are adapted to: obtain search results according to the search request, calculate ranking scores of the search results according to the interest model of the user, and return the ranking scores of the search results to the search server. The search server is adapted to receive personalized search results obtained according to the interest model from the one or more member search devices, and return the personalized search results.

In the present invention, search results are obtained according to the interest model that is extracted according to the personalized data of the user and the search request. In this way, the search results better satisfy the user requirements, and different users may obtain different search results, thus personalizing the search results and facilitating the promotion of search services.

**BRIEF DESCRIPTION OF THE DRAWINGS**

FIG. 1 is a block diagram of a search system in an embodiment of the present invention;
FIG. 2 illustrates an internal structure of a search system in an embodiment of the present invention;
FIG. 3 is a block diagram of a search system in an embodiment of the present invention;
FIG. 4 illustrates an internal structure of a search system in an embodiment of the present invention;
FIG. 5 is a block diagram of a search system in an embodiment of the present invention;
FIG. 6 illustrates an internal structure of a search system in an embodiment of the present invention;
FIG. 7 is a flowchart of a search method in an embodiment of the present invention;
FIG. 8 is a flowchart of a search method in an embodiment of the present invention;
FIG. 9 is a flowchart of a search method in an embodiment of the present invention;
FIG. 10 is a block diagram of a search system in an embodiment of the present invention;
FIG. 11 illustrates an internal structure of a search system in an embodiment of the present invention;
FIG. 12 is a block diagram of a search system in an embodiment of the present invention;
FIG. 13 illustrates an internal structure of a search system in an embodiment of the present invention;
FIG. 14 is a block diagram of a search system in an embodiment of the present invention;
FIG. 15 illustrates an internal structure of a search system in an embodiment of the present invention;
FIG. 16 is a block diagram of a search system in an embodiment of the present invention;
FIG. 17 illustrates an internal structure of a search system in an embodiment of the present invention;
FIG. 18 is a block diagram of a search system in an embodiment of the present invention;
FIG. 19 illustrates an internal structure of a search system in an embodiment of the present invention;
FIG. 20 is a block diagram of a search system in an embodiment of the present invention;
FIG. 21 illustrates an internal structure of a search system in an embodiment of the present invention;
FIG. 22 is a flowchart of a search method in an embodiment of the present invention;
FIG. 23 is a flowchart of a search method in an embodiment of the present invention;
FIG. 24 is a flowchart of a search method in an embodiment of the present invention;
FIG. 25 is a flowchart of a search method in an embodiment of the present invention;
FIG. 26 is a flowchart of a search method in an embodiment of the present invention; and
FIG. 27 is a flowchart of a search method in an embodiment of the present invention.

**DETAILED DESCRIPTION OF THE EMBODIMENTS**

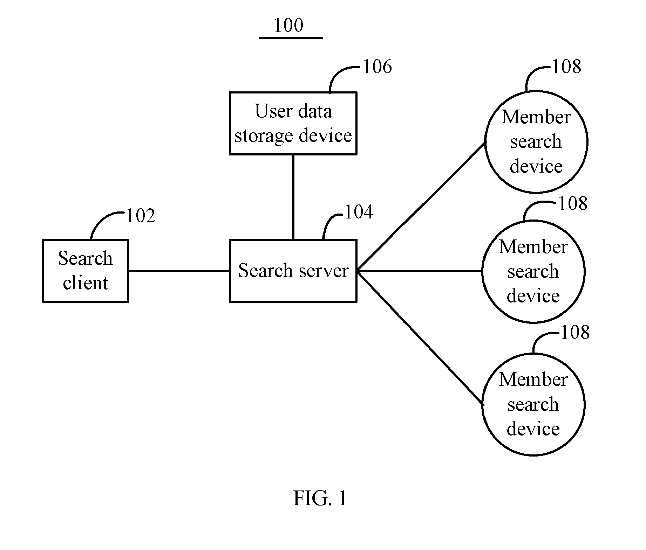

FIG. 1 is a block diagram of a search system 100 in an embodiment of the present invention. In this embodiment, the search system 100 includes a search client 102, a search server 104, a user data storage device 106, and one or more member search devices 108.

The search client 102 is adapted to send a search request to the search server 104 according to the key words input by a user, and receive search results from the search server 104. In this embodiment, the search client 102 may be a terminal device with communication functions, such as a personal computer (PC), a notebook computer (NB), a personal digital assistant (PDA), a handset (HS), and an intelligent optical disk drive (IODD). This embodiment is based on the HS.

The search server 104 may establish search communications with the one or more member search devices 108, and is adapted to: receive a search request from the search client 102, extract an interest model of a user according to the user data, distribute the search request and interest model to the member search devices 108, receive search results and ranking scores of the search results from the one or more member search devices 108, perform relevance sorting on the search results according to the ranking scores, and send the sorted search results to the search client 102.

The one or more member search devices 108 are adapted to: obtain search results according to the search request, calculate the ranking scores of the search results according to the interest model, and return the ranking scores to the search server 104.

The user data storage device 106 is adapted to store the user data, for example, static user profile, interest and hobby, search history, position information, and presence information. In this embodiment, the user data storage device 106 may be configured in internal systems of an operator.

The member search devices 108 are responsible for receiving a search request from the search server 104 to complete the search, ranking and sorting the search results according to a same personalized ranking algorithm and an interest model of a user, and returning the personalized search results and ranking scores to the search server 104.

In other embodiments, optionally, the search server 104 or one or more member search devices 108 are further adapted to filter the search results according to the ranking scores calculated according to the search results and the interest model.

In other embodiments, optionally, the search server 104 may specify a unified personalized ranking algorithm for the member search devices 108 to personalize the search results. After each member search device 108 ranks the search results according to the specified personalized ranking algorithm, and returns the personalized search results and ranking scores, the search server 104 summarizes the search results, and performs overall sorting on the search results according to the ranking scores that are calculated according to the unified personalized ranking algorithm, and returns the final personalized search results to the search client 102.

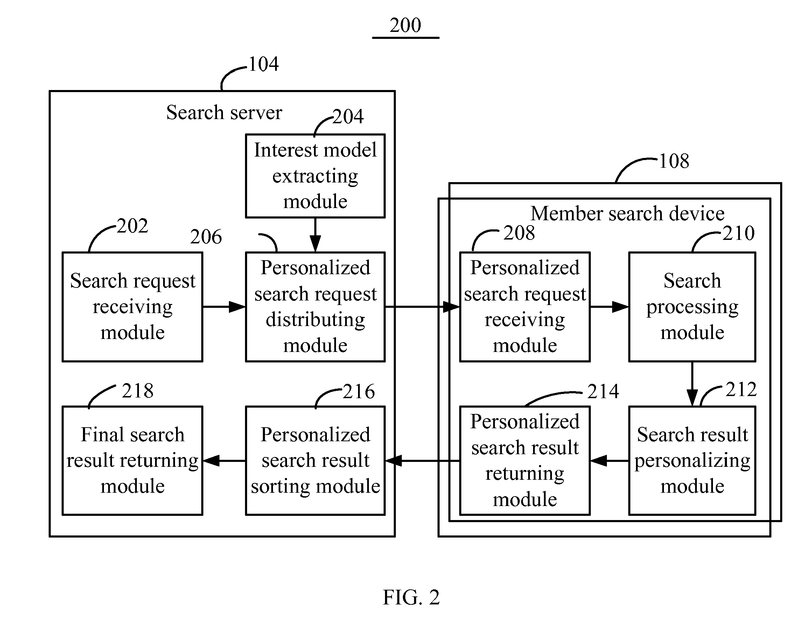

As shown in FIG. 2, the search server 104 may further include a search request receiving module 202, an interest model extracting module 204, a personalized search request distributing module 206, a personalized search result sorting module 216, and a final search result returning module 218.

The search request receiving module 202 is adapted to receive a search request from the search client 102. The search request may include one or more search key words input by the user. The interest model extracting module 204 is adapted to extract an interest model of the user according to the personalized data of the user. In this embodiment, the user data may include the static profile, search history, position information, and presence information of the user. The personalized search request distributing module 206 is adapted to distribute a personalized search request that carries the interest model to the one or more member search devices 108. In addition, the personalized search request distributing module 206 may specify a unified personalized ranking algorithm for the one or more member search devices 108 to personalize search results, where the unified personalized ranking algorithm may be represented by an algorithm ID. The personalized search result sorting module 216 is adapted to: summarize the search results of the member search devices 108, calculate the ranking scores of the search results according to the unified personalized ranking algorithm, and perform overall sorting on the search results of each member search device. For example, the personalized search result sorting module 216 sorts the search results with high relevance at front positions or after the search results of bidding rank. In this way, the user may quickly browse desired search results with high relevance. The final search result returning module 218 is adapted to send final search results to the search client 102, where the search results may be filtered and include only search results with high relevance, and provide the user with some search results. It may reduce the network traffic and ease the pressure on the search client 102.

The member search devices 108 may further include a personalized search request receiving module 208, a search processing module 210, a search result personalizing module 212, and a personalized search result returning module 214.

The personalized search request receiving module 208 is adapted to receive a search request. In this embodiment, the search request may be sent from the search server 104. The personalized search request receiving module 208 may also receive an interest model of a user and a ranking algorithm ID from the search server 104. The search processing module 210 is adapted to obtain search results through search by using the search key words. The search result personalizing module 212 is adapted to personalize the search results according to the interest model of the user or by using a specified unified personalized ranking algorithm. The personalized search result returning module 214 is adapted to return search results or ranking scores of the search results. In this embodiment, the personalized search result returning module 214 returns the search results and ranking scores to the search server 104.

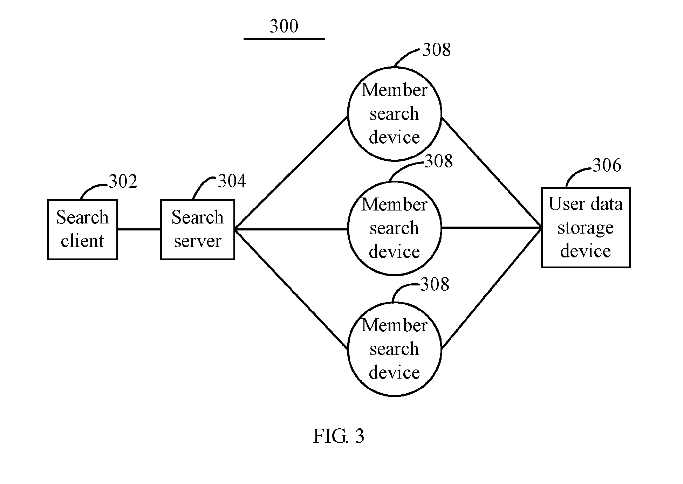

FIG. 3 is a block diagram of a search system 300 in an embodiment of the present invention. In this embodiment, the search system includes a search client 302, a search server 304, a user data storage device 306, and one or more member search devices 308. In this embodiment, the member search devices 308 may access the user data storage device 306, and do not need to distribute the interest model of the user through the search server 304, thus saving network resources.

The search client 302 is adapted to: send a search request to the search server 304 according to the key words input by the user, and receive search results returned by the search server 304. In this embodiment, the search client 302 may be a terminal device with communication functions, such as a PC, an NB, a PDA, an HS, and an IODD. This embodiment is based on the HS.

The search server 304 may establish search communications with one or more member search devices, and is adapted to: receive a search request from the search client 302, distribute the search request (that carries the user ID) to the member search devices 308, receive search results and ranking scores of the search results from the one or more member search devices 308, perform relevance sorting on the search results according to the ranking scores, and send the sorted search results to the search client 302. The one or more member search devices 308 may also be configured to: extract an interest model according to the user data, calculate ranking scores of the search results according to the interest model and a unified personalized ranking algorithm, and return the ranking scores of the search results to the search server 304.

The user data storage device 306 is adapted to store the user data, for example, the static profile, interest and hobby, search history, position information, and presence information of the user. In this embodiment, the user data storage device 306 may be configured in internal systems of the operator and connected with the member search devices 308.

The search server 304 is responsible for receiving a search request (that carries the user ID) from the search client 302 and distributing the search request to the one or more member search devices 308. After the one or more member search devices rank the search results according to the extracted interest model and return the personalized search results and the ranking scores, the search server 304 summarizes the returned search results, performs overall sorting on the search results according to the ranking scores of the search results returned by the member search devices 308, and returns the final personalized search results to the search client 302.

The member search devices 308 are responsible for receiving a search request (that carries the user ID) sent from the search server 304, accessing the user data storage device 306 according to the user ID, extracting an interest model from the user data to complete the search, ranking and sorting the search results according to the extracted interest model and by using the same personalized ranking algorithm, and returning the personalized search results and corresponding ranking scores to the search server 304.

In other embodiments, optionally, the search server 304 or one or more member search devices 308 are further adapted to filter the search results according to the ranking scores that are calculated according to the search results and the interest model.

In other embodiments, optionally, the search server 304 may specify a unified personalized ranking algorithm for the member search devices 308 to personalize the search results. After each member search device 308 ranks the search results according to the specified personalized ranking algorithm, and returns the personalized search results and ranking scores, the search server 304 summarizes the search results, and sorts the search results according to the ranking scores that are calculated according to the same personalized ranking algorithm, and returns the final personalized search results to the search client 302.

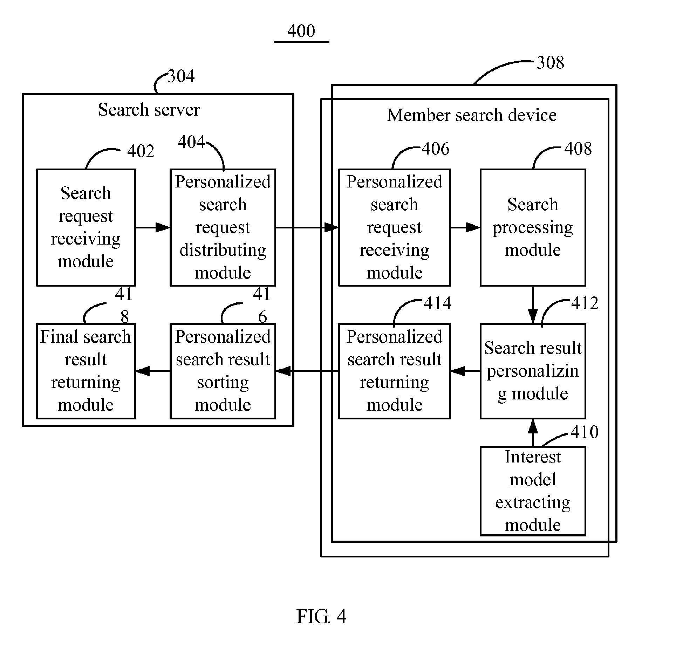

As shown in FIG. 4, the search server 304 may further include a search request receiving module 402, a personalized search request distributing module 404, a personalized search result sorting module 416, and a final search result returning module 418.

The search request receiving module 402 is adapted to receive a search request from the search client 302, where the search request may include one or more search key words input by the user. The personalized search request distributing module 404 is adapted to distribute a search request to the one or more member search devices 308. In addition, the personalized search request distributing module 404 may specify a unified personalized ranking algorithm for the one or more member search devices 308 to personalize search results, where the unified personalized ranking algorithm may be represented by an algorithm ID. The personalized search result sorting module 416 is adapted to calculate the ranking scores of the search results according to the interest model, and perform relevance sorting on the search results. For example, the personalized search result sorting module 416 sorts the search results with high relevance at front positions or after the search results of bidding rank. In this way, the user may quickly browse desired search results with high relevance. The final search result returning module 418 is adapted to send final search results to the search client 302, where the search results may be filtered and include only search results with high relevance, and provide the user with some search results. It may reduce the network traffic and ease the pressure on the search client 302.

In this embodiment, the member search devices 308 may further include a personalized search request receiving module 406, a search processing module 408, an interest model extracting module 410, a search result personalizing module 412, and a personalized search result returning module 414.

The personalized search request receiving module 406 is adapted to receive a search request. In this embodiment, the search request may be sent from the search server 304 and carry search key words and a user ID, but may not include personalized data of the user for searching. The search processing module 408 is adapted to obtain search results through search by using the search key words. The interest model extracting module 410 is adapted to extract an interest model of the user according to the personalized data of the user. In this embodiment, the user data may include the static profile, search history, position information, and presence information of the user. The search result personalizing module 412 is adapted to personalize the search results according to the interest model of the user or by using a unified personalized ranking algorithm. The personalized search result returning module 414 is adapted to return search results or ranking scores of the search results. In this embodiment, the personalized search result returning module 414 returns the search results and ranking scores to the search server 304.

In an embodiment of the present invention, search results are obtained according to the interest model that is extracted according to the personalized data of the user and the search request. In this way, the search results better satisfy the user requirements, and different users may obtain different search results, thus personalizing the search results and facilitating the promotion of search services.

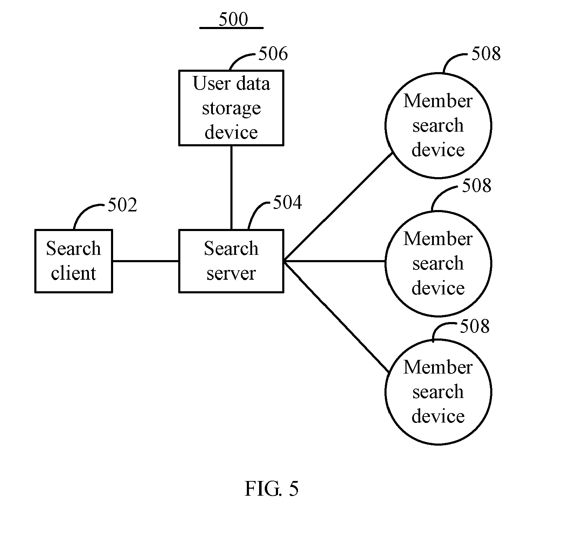

FIG. 5 is a block diagram of a search system 500 in an embodiment of the present invention. In this embodiment, the search system 500 includes a search client 502, a search server 504, a user data storage device 506, and one or more member search devices 508. In this embodiment, the search server 504 ranks and sorts the search results by using the interest model of the user, and does not need to distribute the interest model to the member search devices 508, thus saving network resources.

The search client 502 is adapted to: send a search request to the search server 504 according to the key words input by a user, and receive search results from the search server 504. In this embodiment, the search client 502 may be a terminal device with communication functions, such as a PC, an NB, a PDA, an HS, and an IODD. This embodiment is based on the HS.

The search server 504 may establish search communications with the one or more member search devices 508, and is adapted to: receive a search request from the search client 502, extract an interest model of a user according to the user data, distribute the search request to the member search devices 508, receive search results from the one or more member search devices 508, calculate the ranking scores of the search results according to the interest model, perform relevance sorting on the search results according to the ranking scores, and send the sorted search results to the search client 502. The one or more member search devices 508 are adapted to obtain search results according to the search request, and return the search results to the search server 504.

The user data storage device 506 is adapted to store the user data, for example, the static profile, interest and hobby, search history, position information, and presence information of the user. In this embodiment, the user data storage device 506 may be configured in internal systems of the operator.

The member search devices 508 are responsible for receiving a search request from the search server 504, completing the search, and returning the search results to the search server 504.

In other embodiments, optionally, the search server 504 may be configured to calculate ranking scores according to the search results and the interest model and filter the search results according to a preset threshold.

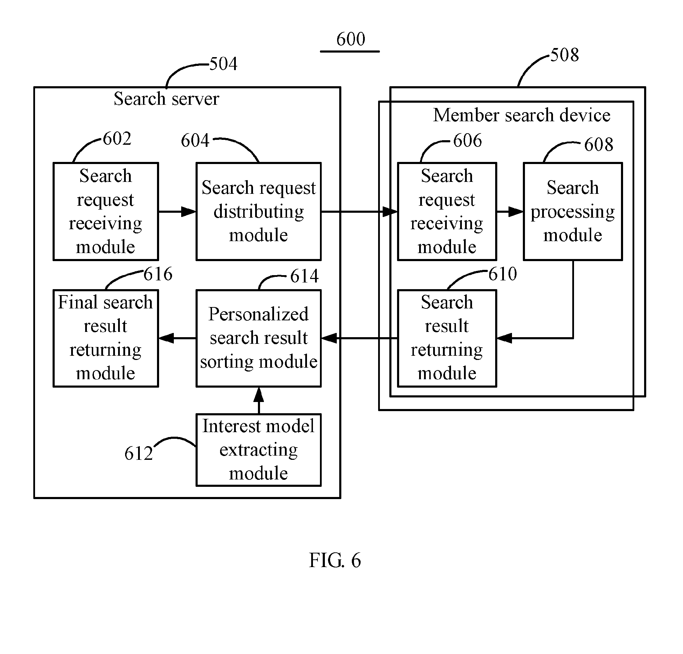

As shown in FIG. 6, the search server 504 may further include a search request receiving module 602, a search request distributing module 604, an interest model extracting module 612, a personalized search result sorting module 614, and a final search result returning module 616.

The search request receiving module 602 is adapted to receive a search request from the search client 502, where the search request may include one or more search key words input by the user. The personalized search request distributing module 604 is adapted to distribute the search request to the one or more member search devices 508. The interest model extracting module 612 is adapted to extract an interest model of a user according to the user data. The personalized search result sorting module 614 is adapted to calculate ranking scores of the search results according to the interest model, and perform relevance sorting on the search results. For example, the personalized search result sorting module 614 sorts the search results with high relevance at front positions or after the search results of bidding rank. In this way, the user can quickly browse desired search results with high relevance. The final search result returning module 616 is adapted to send final search results to the search client 502, where the search results may be filtered and include only search results with high relevance, and provide the user with some search results. It may reduce the network traffic and ease the pressure on the search client 502.

In this embodiment, the member search devices 508 may further include a search request receiving module 606, a search processing module 608, and a search result returning module 610.

The search request receiving module 606 is adapted to receive a search request. In this embodiment, the search request may be sent from the search server 504 and include search key words, but may not include personalized data of the user for searching. The search processing module 608 is adapted to obtain search results through search by using the search key words. The search result returning module 610 is adapted to return search results to the search server 504.

In an embodiment of the present invention, search results are obtained according to the interest model that is extracted according to the personalized data of the user and the search request. In this way, the search results better satisfy the user requirements, and different users may obtain different search results, thus personalizing the search results and facilitating the promotion of search services.

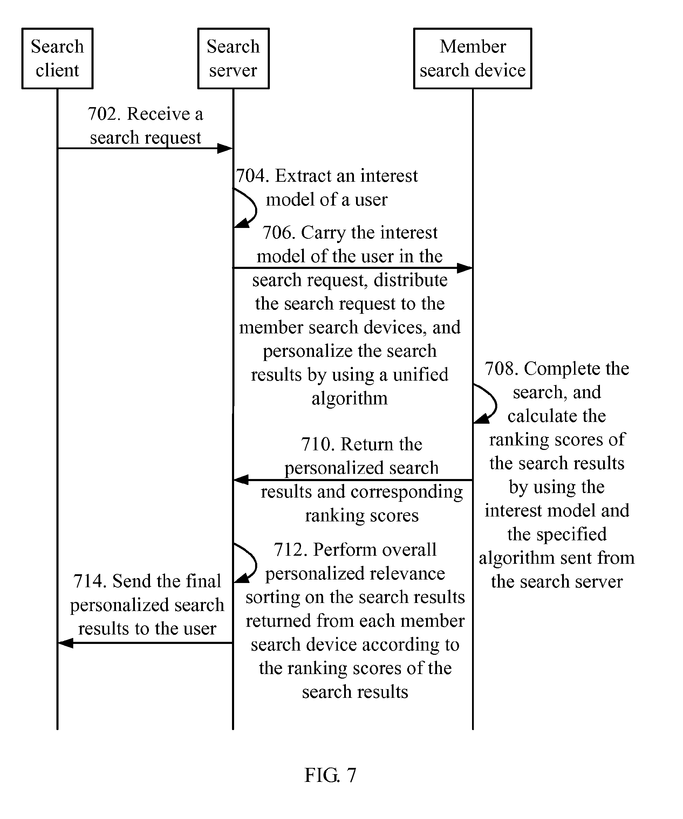

FIG.7 illustrates a search method in an embodiment of the present invention. The method may provide a search client user with personalized search based on the foregoing search system, where the personalized search may provide related search results according to the interest model of the search client user. The method includes the following steps:

Step 702: The search server receives a search request from the search client, where the search request includes one or more search key words. The search request may be a signal that the mobile terminal sends to the network.

Step 704: The search server extracts the interest model of the user according to the personalized data of the user. In this embodiment, the personalized data of the user includes one or more of the following: static user profile, search history, position information or presence information. The interest model is an interest model vector composed of N-dimensional ranking scores of the user, where $N \geq 2$.

Step 706: The search server distributes the one or more search key words and the interest model to one or more member search devices. In this embodiment, the interest model of the user is carried in the search request; the search request is distributed to the member search devices; a unified algorithm is specified for personalization of the search results.

Step 708: The one or more member search devices complete the search, calculate the ranking scores of the search results by using the interest model of the user and the specified unified algorithm sent from the search server, and sort the search results according to the ranking scores. In addition, the one or more member search devices may filter the search results according to a preset threshold.

Step 710: The search server receives personalized search results and corresponding ranking scores from the member search devices.

Step 712: The search server performs overall personalized relevance sorting on the search results from each member search device according to the ranking scores of the search results. After the relevance sorting is performed on the search results, the method may further include: filtering the search results according to the ranking scores. The filtering process includes: reserving search results whose ranking scores are greater than or equal to the preset threshold, for example, reserving search results with the relevance greater than or equal to 0.8.

Step 714: The search server sends final personalized search results to the search client user.

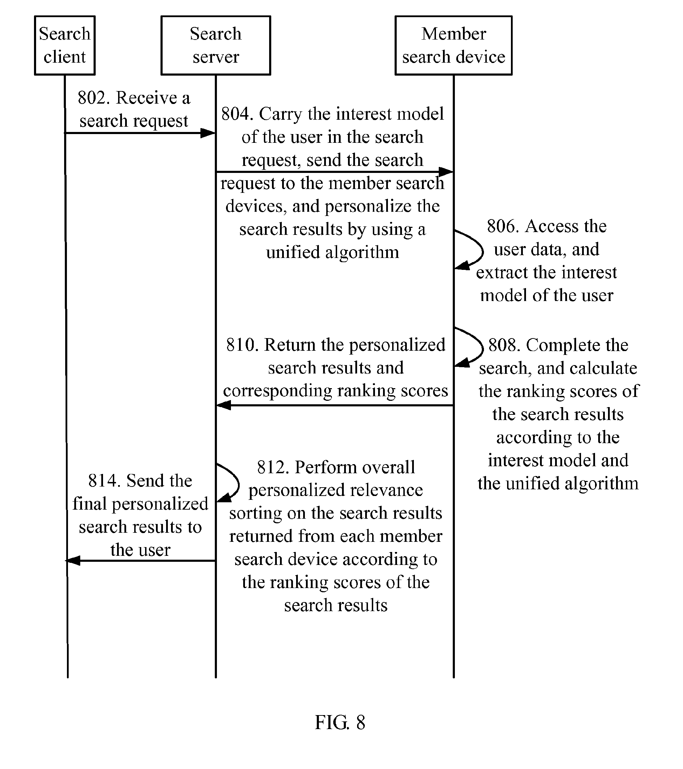

FIG. 8 illustrates a search method in an embodiment of the present invention. The method may provide a search client user with personalized search based on the foregoing search system, where the personalized search may provide related search results according to the interest model of the search client user. The method includes the following steps:

Step 802: The search client sends a search request that includes one or more search key words to the search server. In this embodiment, a mobile terminal sends a search signal to the search server.

Step 804: The search server distributes the search request and the user ID to the member search devices.

Step 806: The member search devices access the user data storage device according to the user ID, and extract an interest model of a user from the personalized data of the user.

Step 808: Each member search device completes the search, and performs personalized relevance ranking and sorting on the search results according to the extracted interest model of the user and by using a unified personalized ranking algorithm.

Step 810: The member search devices return the personalized search results and corresponding ranking scores to the search server.

Step 812: The search server performs overall personalized relevance sorting on the search results from each member search device according to the ranking scores of the search results. After the relevance sorting is performed on the search results, the method may further include: filtering the search results according to the ranking scores. The filtering process includes: reserving search results whose ranking scores are greater than or equal to the preset threshold, for example, reserving search results with the relevance greater than or equal to 0.8.

Step 814: The search server returns final personalized search results to the search client user.

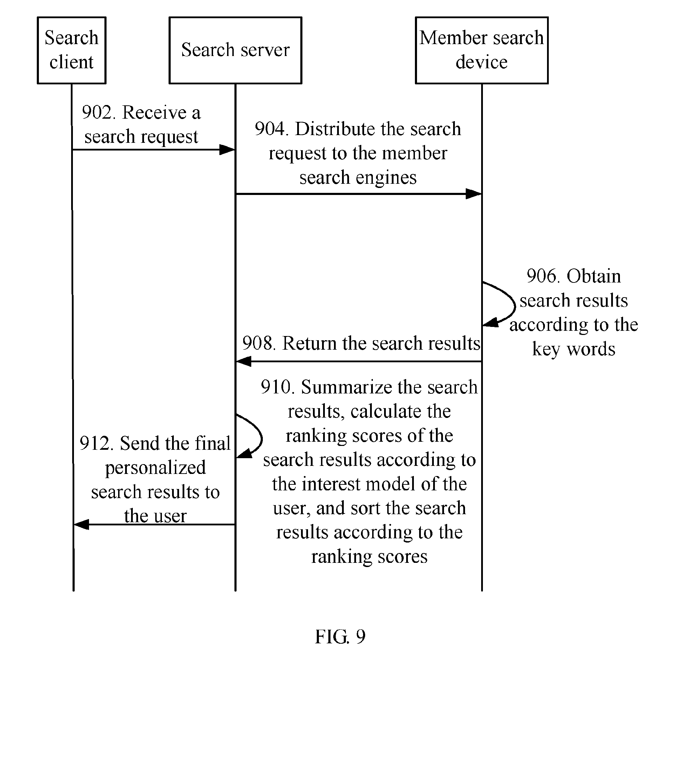

FIG. 9 illustrates a search method in an embodiment of the present invention. The method may provide a search client user with personalized search based on the foregoing search system, where the personalized search may provide related search results according to the interest model of the search client user. The method includes the following steps:

Step 902: The search client sends a search request that includes one or more search key words to the search server. In this embodiment, a mobile terminal sends a search signal to the search server.

Step 904: The search server distributes the search request to the member search devices. Step 906: The member search devices obtain search results according to the one or more key words.

Step 908: The member search devices return the search results to the search server.

Step 910: The search server extracts an interest model of the user according to the user data, calculates ranking scores of the search results according to the interest model, and performs overall personalized relevance sorting on the search results returned by each member search device according to the ranking scores of the search results. After the relevance sorting is performed on the search results, the method may further include: filtering the search results according to the ranking scores. The filtering process includes: reserving search results whose ranking scores are greater than or equal to the preset threshold, for example, reserving search results with the relevance greater than or equal to 0.8.

Step 912: The search server returns final personalized search results to the search client user.

The following describes the method by using a specific application example.

1. Define the interest model

The user interest is represented by n dimensions, for example, news, sports, entertainment, economics & finance, science & technology, real estate, games, women, forum, weather, commodities, electrical appliances, music, book, blog, mobile phone, military, education, tourism, multimedia message, ring back tone, catering, civil aviation, industry, agriculture, PC, and geography. The vector composed of ranking scores of the user interests in each dimension, that is, W (r1, r2, r3, ..., rn), is the interest model of the user.

2. The search server extracts an interest model from the user data.

(1) Static interest model W1 corresponding to the static user profile

W1 = (p1, p2, p3, ..., pi, ..., pn), where pi refers to the sum of word frequencies of all the words that belong to the $i^{th}$ interest dimension.

(2) Dynamic interest model W2 corresponding to the search history of the user

W2 = d1 + d2 + d3 + ... + di + ... + dm, where di refers to the interest model vector corresponding to a document clicked by the user; and

$$di = (t1, t2, t3, \ldots, tn).$$

When the user clicks this document, tj is equal to the sum of word frequencies of all the words that belong to the jth interest dimension in the document. When the user evaluates a document clicked by the user, if the evaluation result is good, the di vector is multiplied by a positive constant c(c > 1), indicating that the importance of the document is increased, that is, di = c x di = (c x t1, c x t2, c x t3, ..., c x tn); if the evaluation result is bad, the di vector is multiplied by a reciprocal of the positive constant c, indicating that the importance of the document is decreased, that is, di = 1/c x di = (1/c x t1, 1/c x t2, 1/c x t3, ..., 1/c x tn).

After a period of time, the value of tj is automatically reduced by a certain percentage, indicating that the importance of the document is decreased over the time. If the value of tj is reduced to zero after a long period of time, di is deleted from the history record. For example, the value of tj is reduced by 10% after a month.

(3) Overall interest model. After W1 and W2 are normalized respectively, W1 and W2 are added, that is, the interest model vector W = W1 + W2, or W1 and W2 undergo weighted summing, for example, W = W1 x 30% + W2 x 70%. Then, W is normalized. It is understandable by those skilled in the art that the foregoing feature may also be applied in other embodiments of the present invention.

3. The meta search engine carries the interest model data in a personalized search request, and sends the personalized search request to one or more member search devices, and notifies a specified personalized algorithm to multiple member search devices to personalize the search results.

4. A member search device performs personalized search by using the specified personalized algorithm.

(1) The member search device searches for candidate result documents according to an inverted index.

(2) The member search device performs personalized relevance ranking and sorting on the candidate result documents according to the interest model data and the specified personalized algorithm.

Algorithm (a): W = (r1, r2, r3, ..., rn) refers to the interest model vector sent from the search server; D = (t1, t2, t3, ..., tn) refers to the interest model vector corresponding to the documents.

$$\text{Ranking score} = W \times D = r1 \times t1 + r2 \times t2 + r3 \times t3 + \ldots + rn \times tn$$

or

Algorithm (b): W = (r1, r2, r3, ..., rn) is used as the interest model vector sent from the meta search engine. General document classification algorithms such as Knn and Cvm are used to classify the documents; if a classified result document belongs to type C, type C is matched with the type of each dimension of the interest model, and ranking score ri corresponding to a dimension i that matches the document type is assigned to the document.

$$\text{Ranking score} = ri$$

(3) The member search device returns n most relevant documents (with highest ranking scores) and personalized relevance ranking scores of the documents.

5. The meta search engine performs overall relevance sorting on the personalized search results from each member search device according to the relevance ranking scores that are calculated according to the unified algorithm, and returns the most relevant results to the search client. In the foregoing embodiment, the interest model vector may also be applied in other embodiments of the present invention. This is not further described.

It is understandable to those skilled in the art that all or part of the steps of the foregoing embodiments may be implemented by hardware instructed by a program. The program may enable one or more computer processors to execute the foregoing methods. In addition, the program may be stored in a computer readable storage medium, for example, a read only memory (ROM), a random access memory (RAM), or a compact disk- read only memory (CD-ROM).

In an embodiment of the present invention, search results are obtained according to the interest model that is extracted according to the personalized data of the user and the search request. In this way, the search results better satisfy the user requirements, and different users may obtain different search results, thus personalizing the search results and facilitating the promotion of search services.

In an embodiment, the personalized ranking process is implemented by the member search devices, so that the member search devices may return the most relevant personalized search results and that the meta search engine obtains more accurate personalized search results.

In this embodiment, each member search device personalizes the search results by using a unified algorithm, so that the ranking scores returned by each member search device are comparable; the search server only needs to perform overall sorting on the ranking scores returned by the member search devices to implement overall personalized sorting on the search results, without taking back snapshots of all the documents to perform real-time word segmentation and ranking. In this way, the network traffic is greatly reduced, the burden of the meta search engine is eased, and the efficiency of personalized search is improved.

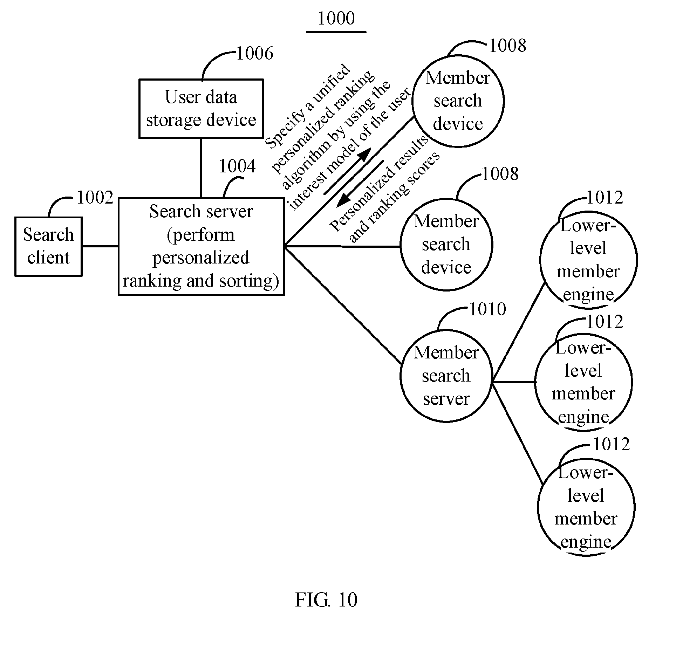

FIG. 10 is a block diagram of a search system in an embodiment of the present invention. In this embodiment, the search system 1000 includes a search client 1002, a search server 1004, a user data storage device 1006, one or more member search devices 1008, a member search server 1010, and one or more lower-level member engines 1012.

The search client 1002 is adapted to: send a search request to the search server 1004 according to the key words input by a user in text mode or speech mode, and receive search results from the search server 1004. In this embodiment, the search client may be a terminal device with communication functions, such as a PC, an NB, a PDA, an HS, and an IODD. This embodiment is based on the HS, and is not further described.

The search server 1004 may establish search communications with the one or more member search devices. Each member search device further includes a member search server 1010. The search server 1004 is adapted to: receive a search request, carry an interest model of the user in the search request, distribute the search request to the one or more member search devices 1008 and the member search server 1010, receive personalized search results obtained according to the interest model from the one or more member search devices 1008 or the member search server 1010, and return the search results. In this embodiment, the search server 1004 extracts the interest model of the user from the user data (including the static profile and search history of the user) or directly takes out the interest model that is pre-extracted according to the user data, carries the interest model in a personalized search request, sends the personalized search request to the one or more member search devices 1008 and the member search server 1010, specifies a personalized ranking algorithm by using a unified algorithm ID to rank the search results, and returns the personalized search results and corresponding ranking scores. Then, the search server 1004 summarizes the search results, performs overall sorting on the search results according to the ranking scores of the search results that are calculated according to the unified personalized ranking algorithm, and returns final personalized search results to the search client 1002.

The user data storage device 1006 is adapted to store the user data that includes the interest model of the user, for example, the static profile, interest and hobby, search history, position information, and presence information of the user. In this embodiment, the user data storage device 1006 may be configured in internal systems of the operator.

The member search devices 1008 may be independent vertical engines. The member search server 1010 may be connected with lower-level member engines 1012. The member search devices 1008 obtain search results according to the search request, calculate ranking scores of the search results according to the interest model of the user, and return the search results and ranking scores to the search server 1004. The member search devices 1008 may also sort the search results, and then send the sorted search results to the search server 1004. The member search server 1010 may distribute the search request to the lower-level member engines 1012. The member search server 1010 or the lower-level member engines 1012 may also personalize the search results. This is not further described.

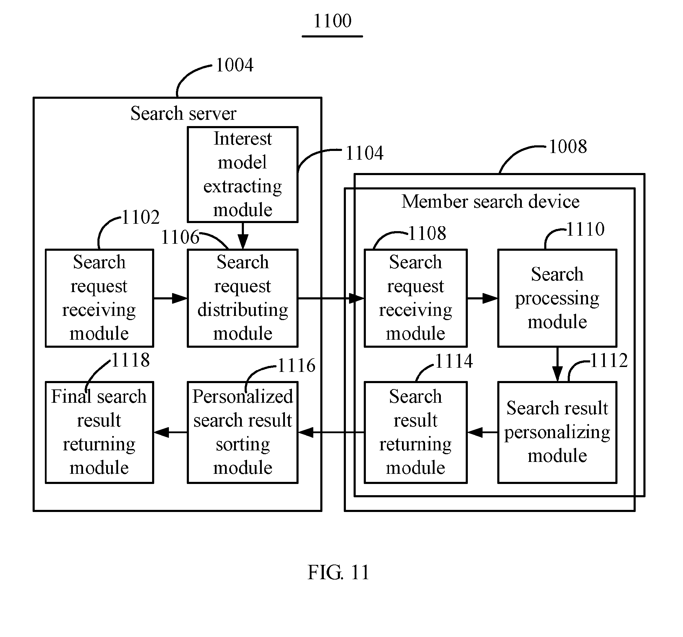

As shown in FIG. 11, the search server 1004 may further include a search request receiving module 1102, an interest model extracting module 1104, a search request distributing module 1106, a personalized search result sorting module 1116, and a final search result returning module 1118.

The search request receiving module 1102 is adapted to receive a search request from the search client 1002, where the search request may include one or more search key words. The key words may be input by the user in text mode or speech mode. The interest model extracting module 1104 is adapted to extract an interest model of the user according to the personalized data of the user. In this embodiment, the user data may include the static profile, search history, position information, and presence information of the user. The search request distributing module 1106 is adapted to distribute a personalized search request that carries the interest model to the one or more member search devices 1008 and the member search server 1010. In addition, the personalized search request distributing module 1106 may specify a unified personalized ranking algorithm for the one or more member search devices 1008 to personalize the search results, where the unified personalized ranking algorithm may be represented by an algorithm ID. The personalized search result sorting module 1116 is adapted to summarize the search results of the member search devices 1008 and the member search server 1010, and perform overall sorting on the search results according to a personalized ranking algorithm. For example, the personalized search result sorting module 1116 sorts the search results with high relevance at front positions or after the search results of bidding rank. This enables the user to quickly browse desired search results with high relevance. In other embodiments, the sorting may be implemented according to the priority information of the member search devices and related factors (for example, a price factor). The final search result returning module 1118 is adapted to send final search results to the search client 1002, where the search results may be filtered and include only search results with high relevance, and provide the user with some search results. It may reduce the network traffic and ease the pressure on the search client 1002.

The member search devices 1008 may further include a search request receiving module 1108, a search processing module 1110, a search result personalizing module 1112, and a search result returning module 1114.

The search request receiving module 1108 is adapted to receive a search request. In this embodiment, the search request may be sent from the search server 1004. The personalized search request receiving module 1108 may also receive an interest model of a user and a ranking algorithm ID from the search server 1004. The search processing module 1110 is adapted to obtain search results through search by using the search key words. The search result personalizing module 1112 is adapted to personalize the search results according to the interest model of the user or by using a unified personalized ranking algorithm. The personalized search result returning module 1114 is adapted to return search results or ranking scores of the search results. In this embodiment, the personalized search result returning module 1114 returns the search results and ranking scores to the search server 1004.

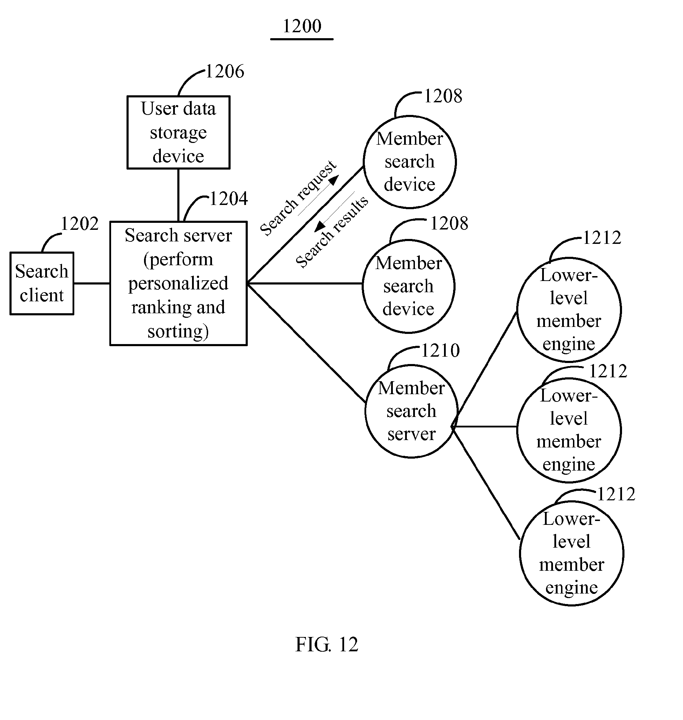

FIG. 12 is a block diagram of a search system in an embodiment of the present invention. In this embodiment, the search system 1200 sends only a search request through a search server, and does not send the interest model of the user; the search server completes the personalized search. The search system 1200 includes a search client 1202, a search server 1204, a user data storage device 1206, one or more member search devices 1208, a member search server 1210, and one or more lower-level member engines 1212.

The search client 1202 is adapted to send a search request to the search server 1204 according to the key words that the user inputs in text mode or speech mode, and receive search results returned by the search server 1204.

The search server 1204 may establish search communications with the one or more member search devices 1208. Each member search device may further include a member search server 1210. The search server 1204 is adapted to: receive a search request, distribute the search request to the one or more member search devices 1208 or the member search server 1210, receive search results from the one or more member search devices 1208 or the member search server 1210, personalize the search results, and return the personalized search results. In this embodiment, the search server 1204 extracts an interest model of the user from the user data (including the static profile and search history of the user) or directly takes out the interest model that is pre-extracted from the user data, and personalizes the search results according to the interest model.

The user data storage device 1206 is adapted to store the user data that includes the interest model of the user, for example, the static profile, interest and hobby, search history, position information, and presence information of the user. In this embodiment, the user data storage device 1206 may be configured in internal systems of the operator.

The member search devices 1208 may be independent vertical engines. The member search server 1210 may be connected with the lower-level member engines 1212. The member search devices 1208 obtain search results according to the search request, and return the search results to the search server 1204. The member search server 1210 may send the search request to the lower-level member engines 1212; the lower-level member engines 1212 complete the search.

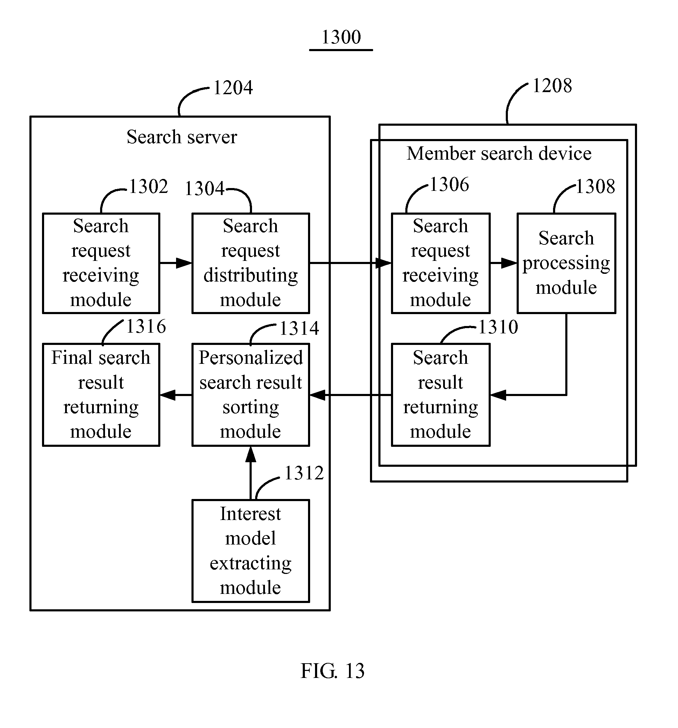

As shown in FIG. 13, the search server 1204 may further include a search request receiving module 1302, a search request distributing module 1304, an interest model extracting module 1312, a personalized search result sorting module 1314, and a final search result returning module 1316.

The search request receiving module 1302 is adapted to receive a search request that may include one or more search key words from the search client 1202, where the key words may be input by the user in text mode or speech mode. The search request distributing module 1304 is adapted to distribute the search request to the member search devices 1208 and the member search server 1210. The interest model extracting module 1312 is adapted to extract an interest model of the user according to the personalized data of the user. In this embodiment, the user data may include the static profile, search history, position information, and presence information of the user. The personalized search sorting module 1314 is adapted to: summarize the search results of the member search devices 1208 and the member search server 1210, calculate the ranking scores of the search results according to the interest model extracted by the interest model extracting module 1312, and sort the search results according to the ranking scores. For example, the personalized search sorting module 1314 sorts the search results with high relevance at front positions or after the search results of bidding rank. This enables the user to quickly browse desired search results with high relevance. In other embodiments, the sorting may be implemented according to the level ranking information of the member search devices and related factors (for example, a price factor). The final search result returning module 1318 is adapted to send final search results to the search client 1202, where the search results may be filtered and include only search results with high relevance, and provide the user with some search results. It may reduce the network traffic and ease the pressure on the search client 1202.

The member search devices 1308 may further include a search request receiving module 1306, a search processing module 1308, and a search result returning module 1310.

The search request receiving module 1306 is adapted to receive a search request. In this embodiment, the search request is sent from the search server 1204 and does not include the interest model of the user. The search processing module 1308 is adapted to obtain search results through search by using the search key words. The search result returning module 1310 is adapted to return the search results.

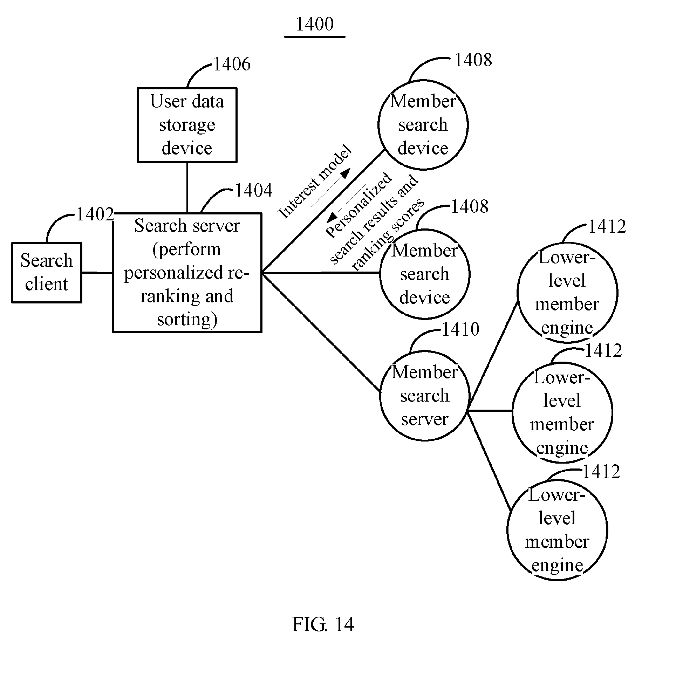

FIG. 14 is a block diagram of a search system in an embodiment of the present invention. In this embodiment, a search server distributes a search request and an interest model to member search devices; the member search devices calculate the ranking scores of search results according to the interest model, and return the ranking scores to the search server; the search server performs personalized re-ranking and sorting on the search results, obtains personalized search results, and returns the personalized search results to a search client. The search system 1400 includes a search client 1402, a search server 1404, a user data storage device 1406, member search devices 1408, a member search server 1410, and lower-level member engines 1412.

The search client 1402 is adapted to send a search request to the search server 1404 according to the key words input by a user in text mode or speech mode, and receive search results from the search server 1404.

The search server 1404 may establish search communications with the one or more member search devices 1408. Each member search device further includes a member search server 1410. The search server 1404 is adapted to: receive a search request, carry the interest model of the user in the search request, distribute the search request to the one or more member search devices 1408 and the search server 1410, receive personalized search results from the member search devices 1408 and the member search server 1410, perform re-ranking on the personalized search results, sort the search results according to the re-ranking results, and return the sorted search results to the search client 1402. When the search server 1404 distributes the search request that carries the interest model of the user, the search server may specify a ranking algorithm.

The user data storage device 1406 is adapted to store user data that includes the interest model of the user, for example, the static profile, interest and hobby, search history, position information, and presence information of the user. In this embodiment, the user data storage device 1006 may be configured in internal systems of the operator. In this embodiment, the user data device 1406 is connected to the search server 1404.

The member search devices 1408 may be independent vertical engines. The member search server 1410 may be connected to the lower-level member engines 1412. The function of the member search server 1410 may be similar to or different from that of the search server 1404. The member search devices 1408 obtain search results according to the search request, and calculate the ranking scores of the search results according to the interest model of the user. If the search server 1404 specifies a ranking algorithm, the member search devices 1408 may calculate the ranking scores of the search results by using the specified ranking algorithm; otherwise, the member search devices 1408 may calculate the ranking scores of the search results by using a private algorithm. The member search devices 1408 return the search results and ranking scores to the search server 1404. The member search server 1410 may distribute the search request to the lower-level member engines 1412. The member search server 1410 or the lower-level member engines 1412 may also personalize the search results. This is not further described.

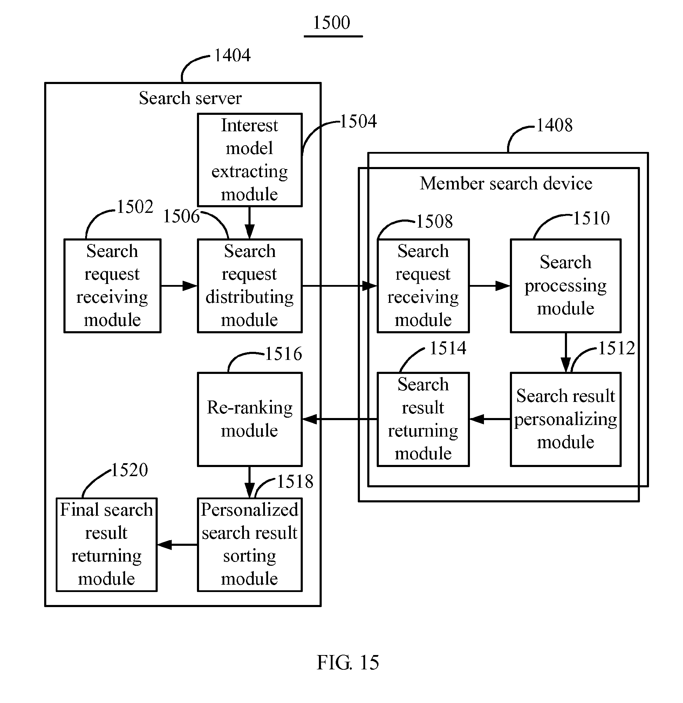

As shown in FIG. 15, the search server 1404 may include a search request receiving module 1502, an interest model extracting module 1504, a search request distributing module 1506, a re-ranking module 1516, a personalized search result sorting module 1518, and a final search result returning module 1520.

The search request receiving module 1502 is adapted to receive a search request from the search client 1402. The search request may include one or more search key words input by the user, and the key words may be input by the user in text mode or speech mode. The interest model extracting module 1504 is adapted to extract the interest model of the user according to the personalized data of the user or take out a pre-stored interest model of the user. In this embodiment, the user data may include the static profile, search history, position information, and presence information of the user. The search request distributing module 1506 is adapted to distribute a personalized search request that carries the interest model to the one or more member search devices 1408 and the member search server 1410. In addition, the personalized search request distributing module 1506 may specify a unified personalized ranking algorithm for the one or more member search devices 1408 and the member search server 1410 to personalize the search results, where the unified personalized ranking algorithm may be represented by an algorithm ID. The re-ranking module 1516 is adapted to re-rank the search results from each member search device 1408 and the member search server 1410. The re-ranking process includes: calculating the ranking scores of the search results according to the extracted interest model, and sorting the search results according to the ranking scores. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor). For example, the level ranking information is calculated by using the following formula:

$$P = r1 \text{ x returned ranking scores} + r2 \text{ x level factor}$$

In this formula, P refers to the level ranking score, r1 refers to the weight of the returned ranking score, r2 refers to the weight of the level factor, the returned ranking scores refer to the ranking scores returned by the member search devices, and the level factors refer to the levels of the member search devices.

The overall ranking information is calculated by using the following formula:

$$R = P + r3 \text{ x price factor ranking score}$$

In this formula, R refers to the overall ranking score, r3 refers to the ranking weight of the price factor, and r1 + r2 + r3 = 1.

The personalized search result sorting module 1518 is adapted to perform overall sorting on the search results according to the re-ranking scores. For example, the personalized search result sorting module 1518 sorts the search results with high relevance at front positions or after the search results of bidding rank. This enables the user to quickly browse desired search results with high relevance. In other embodiments, the sorting may be implemented according to the priority information of the member search devices and related factors (for example, a price factor). The final search result returning module 1520 is adapted to send final search results to the search client 1402, where the search results may be filtered and include only search results with high relevance, and provide the user with some search results. It may reduce the network traffic and ease the pressure on the search client 1402.

The member search devices 1408 further include a search request receiving module 1508, a search processing module 1510, a search result personalizing module 1512, and a search result returning module 1514.

The search request receiving module 1508 is adapted to receive a search request. In this embodiment, the search request may be sent from the search server 1404. The search request receiving module 1508 may further receive an interest model of the user and a ranking algorithm ID from the search server 1404. The search processing module 1510 is adapted to obtain search results through search by using the search key words. The search result personalizing module 1512 is adapted to personalize the search results according to the interest model of the user or by using a specified unified personalized ranking algorithm. If no unified algorithm is specified, the search result personalizing module 1512 personalizes the search results by using a private algorithm. The search result returning module 1514 is adapted to return search results or the ranking scores of the search results. In this embodiment, the search result returning module 1514 returns the search results and ranking scores to the search server 1404.

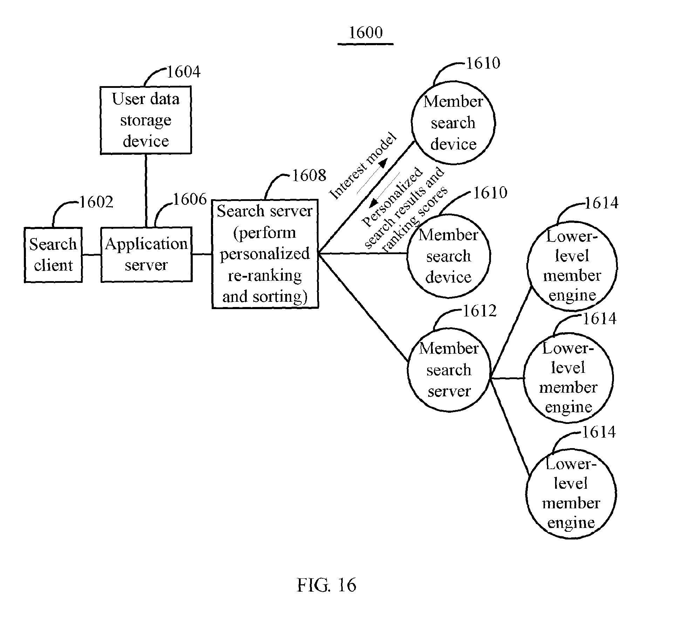

FIG. 16 is a block diagram of a search system in an embodiment of the present invention. In this embodiment, in the search system 1600, an application server extracts an interest model of a user or takes out a pre-stored interest model; a search server 1608 personalizes the search results. The search system 1600 includes a search client 1602, a user data storage device 1604, an application server 1606, a search server 1608, member search devices 1610, a member search server 1612, and lower-level member engines 1614.

The search client 1602 is adapted to: send a search request to the application server 1606 according to the key words input by a user in text mode or speech mode, and receive search results from the application server 1606.

The user data storage device 1604 is adapted to store user data that includes the interest model of the user, for example, the static profile, interest and hobby, search history, position information, and presence information of the user. In this embodiment, the user data storage device 1604 may be configured in internal systems of the operator.

The application server 1606 is connected to the user data storage device 1604 and is adapted to: extract an interest model of a user or take out a pre-stored interest model of the user, send the received search request and interest model to the search server 1608, receive personalized search results from the search server 1608, and return the personalized search results to the search client 1602. In this embodiment, the application server 1606 extracts the interest model of the user from the user data (including the static profile and search history of the user) or directly takes out an interest model that is pre-extracted according to the user data, carries the interest model in a personalized search request, and sends the personalized search request to the search server 1608.

The search server 1608 may communicate with one or more member search devices. Each member search device may further include a member search server. The search server 1608 is adapted to: receive a search request and an interest model of the user from the application server 1606, distribute the search request and the interest model to the member search devices 1610 and the member search server 1612, receive returned personalized search results and ranking scores, summarize the search results, perform overall re-ranking on the search results, and return the re-ranked search results to the application server 1606.

The member search devices 1610 may be independent vertical engines. The member search server 1612 may be connected to the lower-level member engines 1614. The member search devices 1610 obtain search results according to the search request, calculate the ranking scores of the search results according to the interest model of the user, and return the search results and the ranking scores to the search server 1608. The member search devices 1610 may also sort the search results, and then send the sorted search results to the search server 1608. The member search server 1612 may distribute the search request to the lower-level member engines 1614. The member search server 1612 or the lower-level member engines 1614 may personalize the search results. This is not further described.

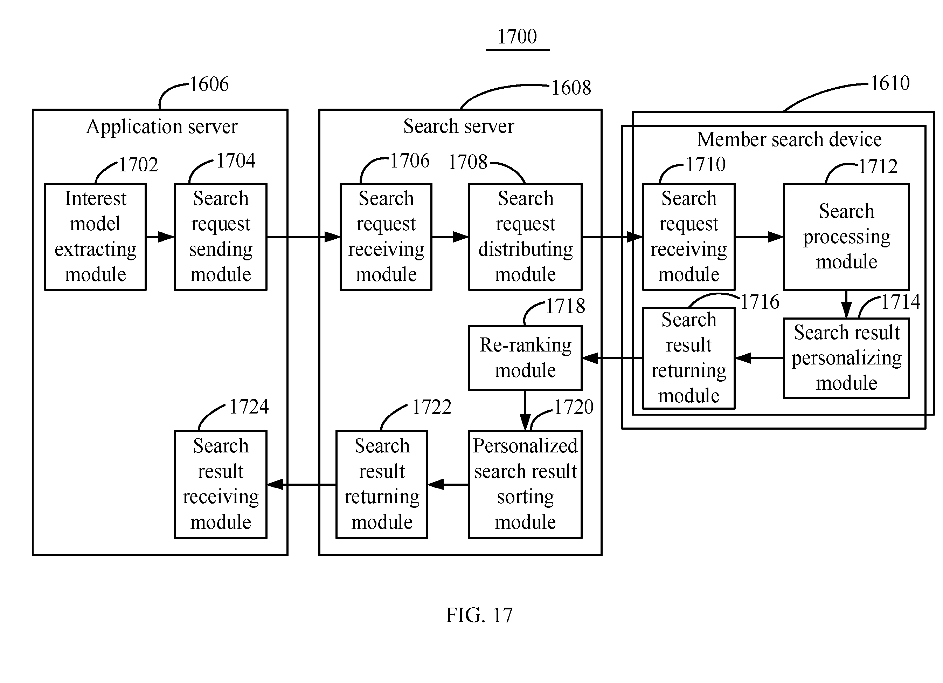

As shown in FIG. 17, the application server 1606 may further include an interest model extracting module 1702, a search request sending module 1704, and a search result receiving module 1724.

The interest model extracting module 1702 is adapted to extract the interest model of the user according to the personalized data of the user or take out a pre-stored interest model of the user. In this embodiment, the user data may include the static profile, search history, position information, and presence information of the user. The search request sending module 1704 is adapted to send the search request and the interest model to the search server 1608. The search result receiving module 1724 is adapted to receive personalized search results from the search server 1608, and return the personalized search results to the search client 1602.

The search server 1608 further includes a search request receiving module 1706, a search request distributing module 1708, a re-ranking module 1718, a personalized search result sorting module 1720, and a search result returning module 1722.

The search request receiving module 1706 is adapted to receive a search request and an interest model of the user from the application server 1606. The search request distributing module 1708 is adapted to distribute the search request and the interest model of the user to the member search devices, and specify a unified ranking algorithm. The re-ranking module 1718 is adapted to: receive search results and ranking scores from each member search device 1610, summarize the search results, and re-rank the search results. The re-ranking process includes: calculating the ranking scores of the search results according to the extracted interest model, and sorting the search results according to the ranking scores. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor). For example, the level ranking information is calculated by using the following formula:

$$P = r1 \text{ x returned ranking scores} + r2 \text{ x level factor}$$

In this formula, P refers to the level ranking score, r1 refers to the weight of the returned ranking score, r2 refers to the weight of the level factor, the returned ranking scores refer to the ranking scores returned by the member search devices, and the level factors refer to the levels of the member search devices.

The overall ranking information is calculated by using the following formula:

$$R = P + r3 \text{ x price factor ranking score}$$

In this formula, R refers to the overall ranking score, r3 refers to the ranking weight of the price factor, and r1 + r2 + r3 = 1.

The personalized search result sorting module 1720 is adapted to sort the search results according to the re-ranking scores. For example, the personalized search result sorting module 1720 sorts the search results with high relevance at front positions or after the search results of bidding rank. This enables the user to quickly browse desired search results with high relevance. In other embodiments, the sorting may be implemented according to the priority information of the member search devices and related factors (for example, a price factor). The search result returning module 1722 is adapted to return search results to the application server 1606, where the search results may be filtered and include only search results with high relevance, and provide the user with some search results. It may reduce the network traffic and ease the pressure on the search client 1602.

The member search devices 1610 may further include a search request receiving module 1710, a search processing module 1712, a search result personalizing module 1714, and a search result returning module 1716.

The search request receiving module 1710 is adapted to receive a search request. In this embodiment, the search request may be sent from the search server 1608. The search request receiving module 1710 may further receive an interest model of the user and a ranking algorithm ID from the search server 1608. The search processing module 1712 is adapted to obtain search results through search by using the search key words. The search result personalizing module 1714 is adapted to personalize the search results according to the interest model of the user or by using a specified unified personalized ranking algorithm. If no unified algorithm is specified, the search result personalizing module 1714 personalizes the search results by using a private algorithm. The search result returning module 1716 is adapted to return search results or the ranking scores of the search results. In this embodiment, the search result returning module 1716 returns the search results and ranking scores to the search server 1608.

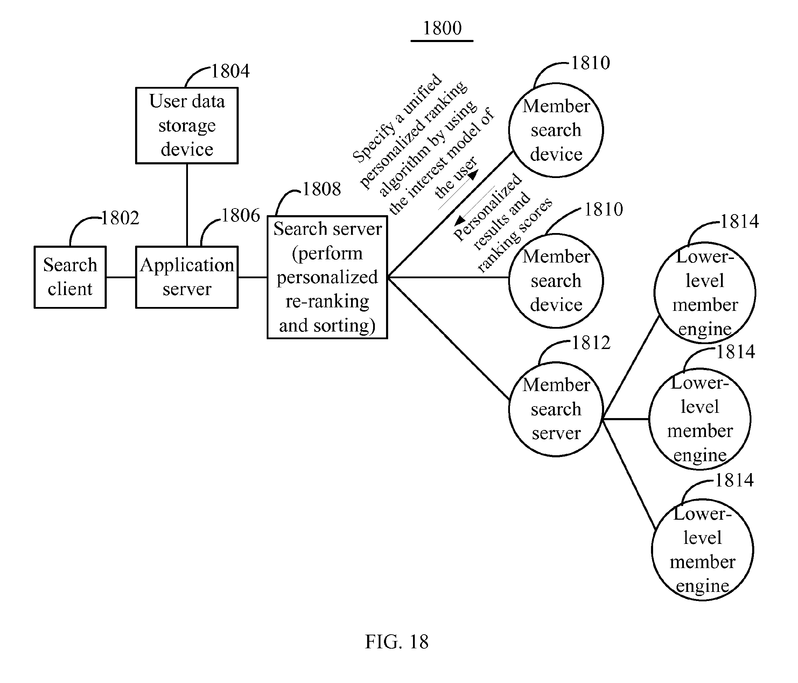

FIG. 18 is a block diagram of a search system in an embodiment of the present invention. In this embodiment, in the search system 1800, an application server extracts an interest model of a user or takes out a pre-stored interest model; a search server 1808 personalizes the search results, but does not need to re-rank the search results. The search system 1800 includes a search client 1802, a user data storage device 1804, an application server 1806, a search server 1808, member search devices 1810, a member search server 1812, and lower-level member engines 1814.

The search client 1802 is adapted to send a search request to the application server 1806 according to the key words input by a user in text mode or speech mode, and receive search results from the application server 1806.

The user data storage device 1804 is adapted to store user data that includes the interest model of the user, for example, the static profile, interest and hobby, search history, position information, and presence information of the user. In this embodiment, the user data storage device 1804 may be configured in internal systems of the operator.

The application server 1806 is connected to the user data storage device 1804 and is adapted to: extract an interest model of a user or take out a pre-stored interest model of the user, send the received search request and interest model to the search server 1808, receive personalized search results from the search server 1808, and return the personalized search results to the search client 1802. In this embodiment, the application server 1806 extracts the interest model of the user from the user data (including the static profile and search history of the user) or directly takes out an interest model that is pre-extracted according to the user data, carries the interest model in a personalized search request, and sends the personalized search request to the search server 1808.

The search server 1808 may communicate with one or more member search devices. Each member search device may further include a member search server. The search server 1808 is adapted to: receive a search request and an interest model of the user from the application server 1806, distribute the search request and the interest model to the member search devices 1810 and the member search server 1812, specify a personalized ranking algorithm by using a unified algorithm ID to rank the search results, receive returned personalized search results and ranking scores, summarize the search results, perform overall ranking on the search results according to the ranking scores returned by each member search device, and return the ranking scores to the application server 1806.

The member search devices 1810 may be independent vertical engines. The member search server 1812 may be connected to the lower-level member engines 1814. The member search devices 1810 obtain search results according to the search request, calculate the ranking scores of the search results according to the interest model of the user, and return the search results and the ranking scores to the search server 1808. The member search devices 1810 may also sort the search results, and then send the sorted search results to the search server 1808. The member search server 1812 may distribute the search request to the lower-level member engines 1814. The member search server 1812 or the lower-level member engines 1814 may personalize the search results. This is not further described.

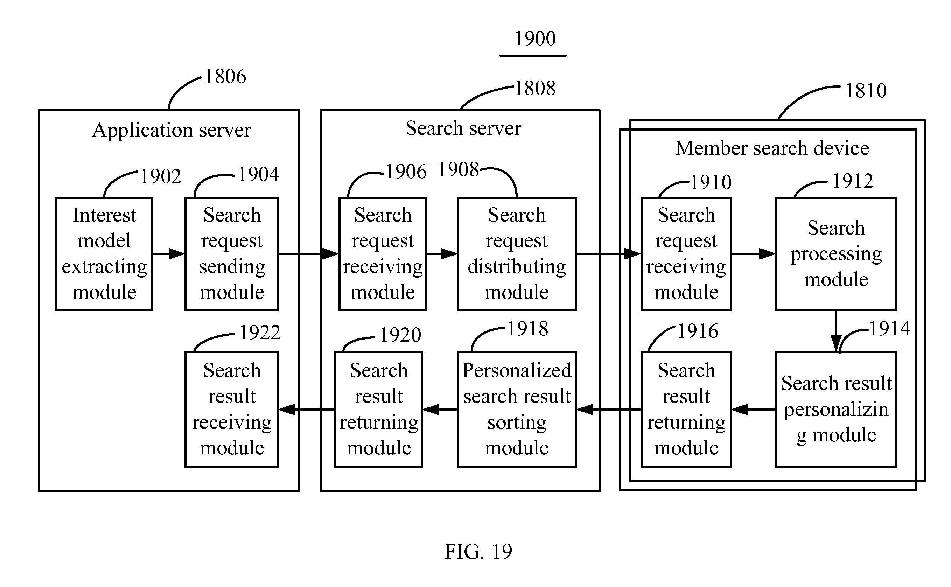

As shown in FIG. 19, the application server 1806 may further include an interest model extracting module 1902, a search request sending module 1904, and a search result receiving module 1922.

The interest model extracting module 1902 is adapted to extract the interest model of the user according to the personalized data of the user or take out a pre-stored interest model of the user. In this embodiment, the user data may include the static profile, search history, position information, and presence information of the user. The search request sending module 1904 is adapted to send the search request and the interest model to the search server 1808. The search result receiving module 1922 is adapted to receive personalized search results from the search server 1808, and return the personalized search results to the search client 1802.

The search server 1808 further includes a search request receiving module 1906, a search request distributing module 1908, a personalized search result sorting module 1918, and a search result returning module 1920.

The search request receiving module 1906 is adapted to receive a search request and an interest model of the user from the application server 1806. The search request distributing module 1908 is adapted to distribute the search request and the interest model of the user to the member search devices, and specify a unified ranking algorithm by using an algorithm ID. The personalized search result sorting module 1918 is adapted to perform overall sorting on the search results according to the returned ranking scores of the search results. For example, the personalized search result sorting module 1918 sorts the search results with high relevance at front positions or after the search results of bidding rank. This enables the user to quickly browse desired search results with high relevance. In other embodiments, the sorting may be implemented according to the priority information of the member search devices and related factors (for example, a price factor). The search result returning module 1920 is adapted to return search results to the application server 1806, where the search results may be filtered and include only search results with high relevance, and provide the user with some search results. It may reduce the network traffic and ease the pressure on the search client 1802.

Each member search device 1810 may further include a search request receiving module 1910, a search processing module 1912, a search result personalizing module 1914, and a search result returning module 1916.

The search request receiving module 1910 is adapted to receive a search request. In this embodiment, the search request may be sent from the search server 1808. The search request receiving module 1910 may further receive an interest model of the user and a ranking algorithm ID from the search server 1808. The search processing module 1912 is adapted to obtain search results through search by using the search key words. The search result personalizing module 1914 is adapted to personalize the search results according to the interest model of the user or by using a specified unified personalized ranking algorithm. The search result returning module 1916 is adapted to return search results or the ranking scores of the search results. In this embodiment, the search result returning module 1916 returns the search results and ranking scores to the search server 1808.

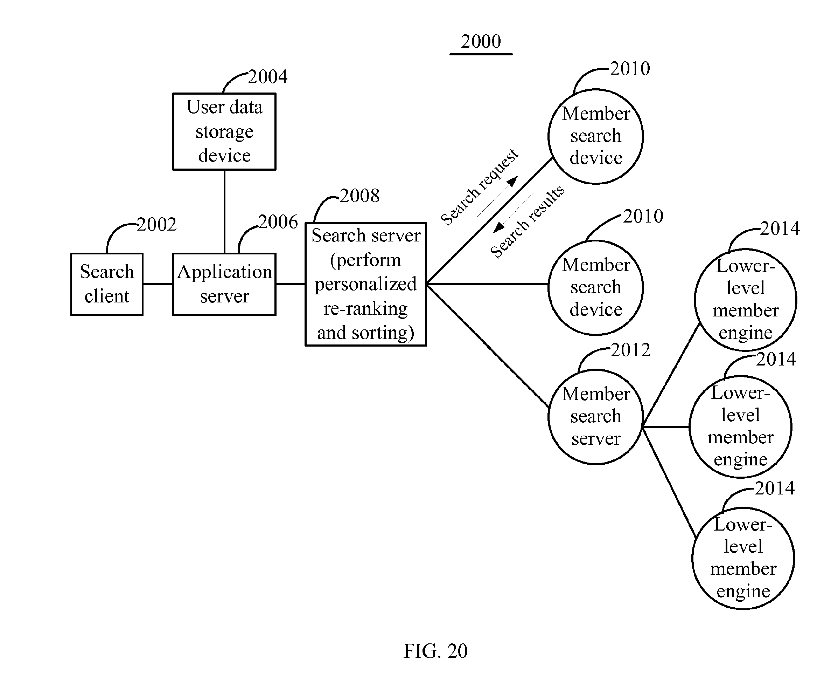

FIG. 20 is a block diagram of a search system in an embodiment of the present invention. In this embodiment, in the search system 2000, an application server extracts an interest model of a user or takes out a pre-stored interest model; a search server 2008 personalizes the search results, but does not need to send the interest model to member search devices and a member search server. The search system 2000 includes a search client 2002, a user data storage device 2004, an application server 2006, a search server 2008, member search devices 2010, a member search server 2012, and lower-level member engines 2014.

The search client 2002 is adapted to send a search request to the application server 2006 according to the key words input by a user in text mode or speech mode, and receive search results from the application server 2006.

The user data storage device 2004 is adapted to store user data that includes the interest model of the user, for example, the static profile, interest and hobby, search history, position information, and presence information of the user. In this embodiment, the user data storage device 2004 may be configured in internal systems of the operator.

The application server 2006 is connected to the user data storage device 2004 and is adapted to: extract an interest model of a user or take out a pre-stored interest model of the user, send the received search request and interest model to the search server 2008, receive personalized search results from the search server 2008, and return the personalized search results to the search client 2002. In this embodiment, the application server 2006 extracts the interest model of the user from the user data (including the static user profile and search history) or directly takes out an interest model that is pre-extracted according to the user data, carries the interest model in a personalized search request, and sends the personalized search request to the search server 2008.

The search server 2008 may communicate with one or more member search devices. Each member search device may further include a member search server. The search server 2008 is adapted to: receive the search request

16

and interest model of the user from the application server 2006, distribute the search request to the member search devices 2010 and the member search server 2012, receive returned search results, calculate ranking scores of the search results according to the interest model of the user, sort the search results according to the ranking scores, and return the sorted search results to the application server 2006.

The member search devices 2010 may be independent vertical engines. The member search server 2012 may be connected to the lower-level member engines 2014. The member search devices 2010 obtain search results according to the search request, and return the search results to the search server 2008. The member search server 2012 may also distribute the search request to the lower-level member engines 2014 to perform the search.

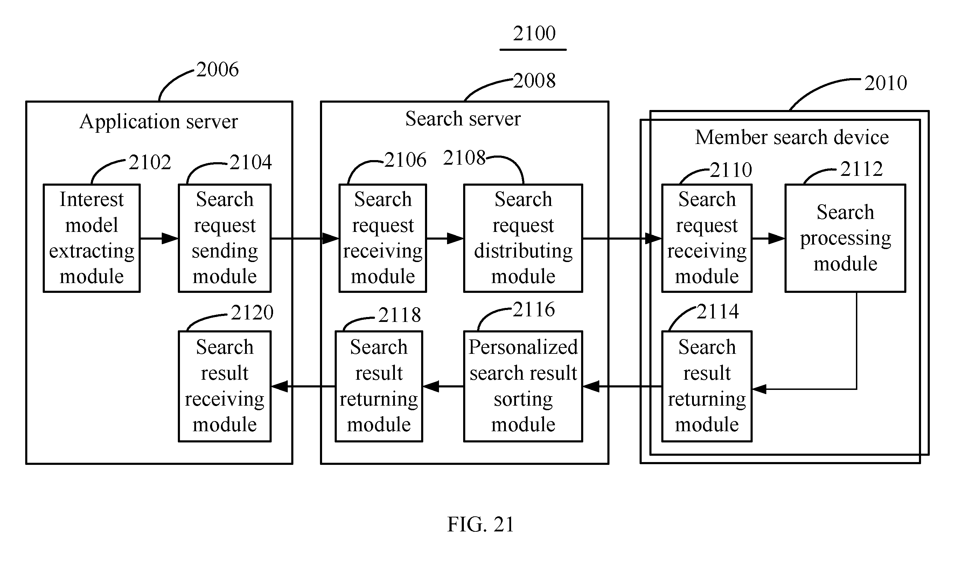

As shown in FIG. 21, the application server 2006 may further include an interest model extracting module 2102, a search request sending module 2104, and a search result receiving module 2120.

The interest model extracting module 2102 is adapted to extract the interest model of the user according to the personalized data of the user or take out a pre-stored interest model of the user. In this embodiment, the user data may include the static profile, search history, position information, and presence information of the user. The search request sending module 2104 is adapted to send the search request and the interest model to the search server 2008. The search result receiving module 2120 is adapted to receive personalized search results from the search server 2008, and return the personalized search results to the search client 2002.

The search server 2008 may further include a search request receiving module 2106, a search request distributing module 2108, a personalized search result sorting module 2116, and a search result returning module 2118.

The search request receiving module 2106 is adapted to receive a search request and an interest model of a user from the application server 2006. The search request distributing module 2008 is adapted to distribute the search request to the member search devices. The personalized search result sorting module 2116 is adapted to: receive returned search results, calculate ranking scores of the search results according to the interest model of the user, and sort the search results according to the ranking scores. For example, the personalized search result sorting module 2116 sorts the search results with high relevance at front positions or after the search results of bidding rank. This enables the user to quickly browse desired search results with high relevance. In other embodiments, the sorting may be implemented according to the priority information of the member search devices and related factors (for example, a price factor). The search result returning module 2118 is adapted to return search results to the application server 2006, where the search results may be filtered and include only search results with high relevance, and provide the user with some search results. It may reduce the network traffic and ease the pressure on the search client 2002.

In this embodiment, the member search devices 2010 may further include a search request receiving module 2110, a search processing module 2112, and a search result returning module. The functions of the member search devices 2010 are the same as those of the foregoing member search devices1208, and are not further described.

In embodiments of the present invention, search results are obtained according to the interest model that is extracted according to the personalized data of the user and the search request. In this way, the search results better satisfy the user requirements, and different users may obtain different search results, thus personalizing the search results and facilitating the promotion of search services. In addition, the member search devices perform personalized ranking, so that the member search devices can return the most relevant search results and that the search server can obtain more accurate search results. Each member search device personalizes the search results by using a unified algorithm, so that the ranking scores returned by each member search device are comparable. In this way, the network traffic is greatly reduced, and the personalized efficiency is improved.

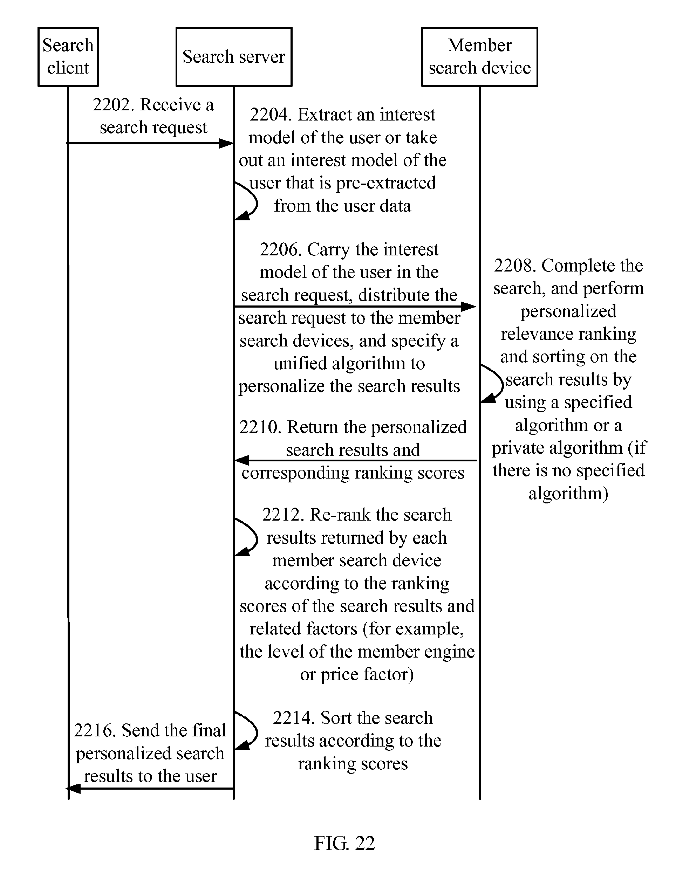

FIG. 22 is a flowchart of a search method in an embodiment of the present invention. The search method includes the following steps:

Step 2202: The search server receives a search request from the search client. The search request includes one or more search key words, and the search key words may be input by the user in text mode or speech mode. The search request may be a signal that the mobile terminal sends to the network.

Step 2204: The search server extracts an interest model of the user according to the personalized data of the user or takes out a pre-stored interest model of the user. In this embodiment, the personalized data of the user includes one or more of the following: static user profile, search history, position information or presence information. The interest model is an interest model vector composed of N-dimensional ranking scores of the user, where $N \geq 2$.

Step 2206: The search server distributes the one or more search key words and the interest model to one or more member search devices or the member search server. In this embodiment, the interest model of the user is carried in the search request, and the search request is distributed to the member search devices; a unified algorithm may be specified for personalization of the search results. The unified algorithm may be specified by an algorithm ID.

Step 2208: The member search devices complete the search. If there is a specified algorithm, the member search devices calculate the ranking scores of the search results by using the specified unified personalized ranking algorithm; otherwise, the member search devices calculate the ranking scores of the search results by using a private algorithm, and sort the search results according to the ranking scores. In addition, the member search devices may filter the search results according to a preset threshold.

Step 2210: The search server receives personalized search results and corresponding ranking scores from the member search devices.

Step 2212: The search server re-ranks the search results according to the ranking scores of the search results and related factors (including levels of the member search devices and a price factor). The re-ranking process includes: calculating the ranking scores of the search results according to the extracted interest model. For example, the level ranking information is calculated by using the following formula:

$$P = r1 \times \text{returned ranking scores} + r2 \times \text{level factor}$$

In this formula, P refers to the level ranking score, r1 refers to the weight of the returned ranking score, r2 refers to the weight of the level factor, the returned ranking scores refer to the ranking scores returned by the member search devices, and the level factors refer to the levels of the member search devices.

The overall ranking information is calculated by using the following formula:

$$R = P + r3 \times \text{price factor ranking score}$$

In this formula, R refers to the overall ranking score, r3 refers to the ranking weight of the price factor, and $r1 + r2 + r3 = 1$.

Step 2214: The search server sorts the search results according to the re-ranking results. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor).

Step 2216: The search server returns the final search results to the search client. The returned search results may be filtered and include only search results with high relevance. Some search results are provided to the user. In this way, the network traffic is reduced, and the pressure on the search client is eased.

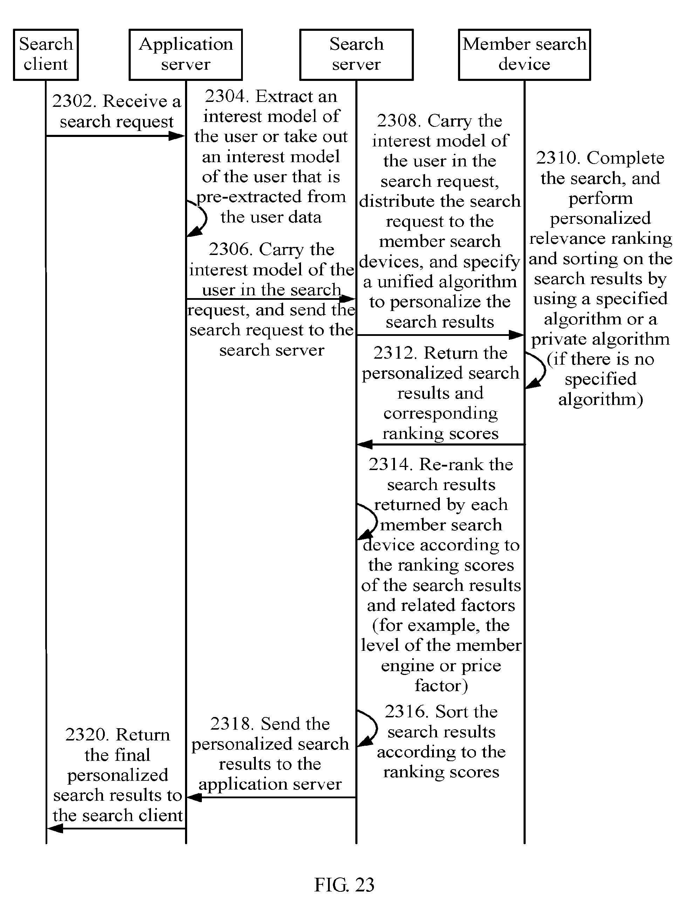

FIG. 23 is a flowchart of a search method in an embodiment of the present invention. In this embodiment, the search server receives a search request from the application server, and returns the search results to the application server; the application server provides the interest model of the user.

Step 2302: The search client sends a search request to the application server. The search request includes one or more search key words, and the search key words may be input by the user in text mode or speech mode. The search request may be a signal that the mobile terminal sends to the network.

Step 2304: The application server extracts an interest model of the user from the personalized data of the user (for example, the static profile and click history of the user) or directly takes out an interest model of the user that is pre-extracted according to the personalized data of the user. The interest model may be an interest model vector composed of N-dimensional ranking scores of the user, where $N \geq 2$.

Step 2306: The application server carries the interest model of the user in the search request, and sends the search request to the search server.

Step 2308: The search server distributes the one or more search key words and the interest model to one or more member search devices. In this embodiment, the interest model of the user is carried in the search request, and the search request is distributed to the member search devices; a unified algorithm may be specified for personalization of the search results. The unified algorithm may be specified by an algorithm ID.

Step 2310: The member search devices complete the search. If there is a specified algorithm, the member search devices calculate the ranking scores of the search results by using the specified unified personalized ranking algorithm; otherwise, the member search devices calculate the ranking scores of the search results by using a private algorithm, and sort the search results according to the ranking scores, where the private algorithm may be the same as or different from the specified ranking algorithm. In addition, the one or more member search devices may filter the search results according to a preset threshold.

Step 2312: The search server receives personalized search results and corresponding ranking scores from the member search devices.

Step 2314: The search server re-ranks the search results according to the ranking scores of the search results and related factors (including levels of the member search devices and a price factor). The re-ranking process includes: calculating the ranking scores of the search results according to the extracted interest model. For example, the level ranking information is calculated by using the following formula:

$$P = r1 \text{ x returned ranking scores} + r2 \text{ x level factor}$$

In this formula, P refers to the level ranking score, r1 refers to the weight of the returned ranking score, r2 refers to the weight of the level factor, the returned ranking scores refer to the ranking scores returned by the member search devices, and the level factors refer to the levels of the member search devices.

The overall ranking information is calculated by using the following formula:

$$R = P + r3 \text{ x price factor ranking score}$$

In this formula, R refers to the overall ranking score, r3 refers to the ranking weight of the price factor, and r1 + r2 + r3 = 1.

Step 2316: The search server sorts the search results according to the re-ranking results. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor).

Step 2318: The search server returns the sorted results to the application server.

Step 2320: The application server returns the search results to the search client. The returned search results in step 2318 and step 2320 may be filtered and include only search results with high relevance. Some search results are provided to the user. In this way, the network traffic is reduced, and the pressure on the search client is eased.

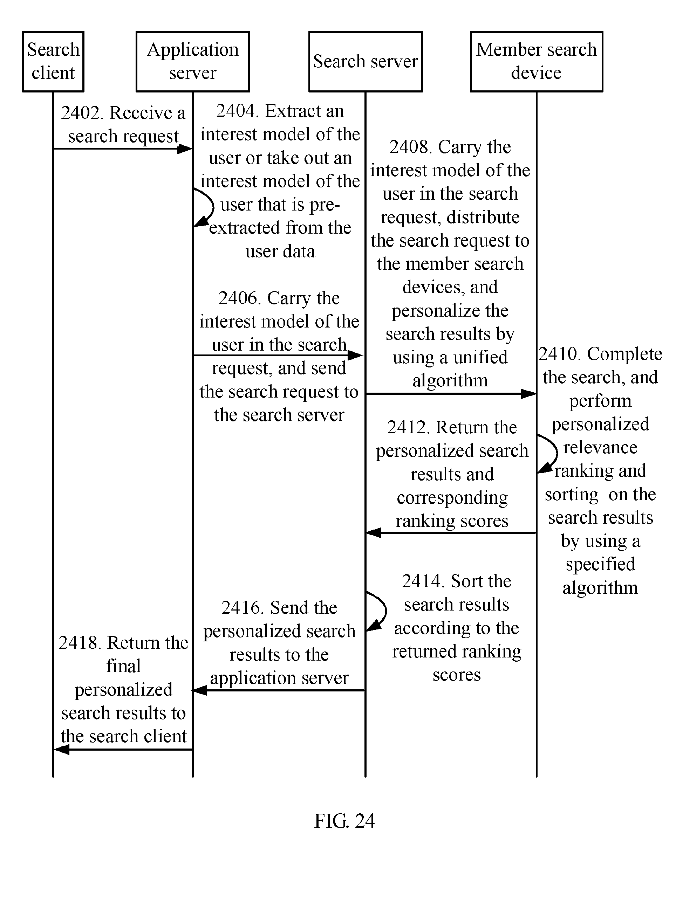

FIG. 24 is a flowchart of a search method in an embodiment of the present invention. In this embodiment, the search server specifies a unified personalized ranking algorithm for the member search devices. The method includes the following steps:

Step 2402: The search client sends a search request to the application server. The search request includes one or more search key words, and the search key words may be input by the user in text mode or speech mode. The search request may be a signal that the mobile terminal sends to the network.

Step 2404: The application server extracts an interest model of the user from the personalized data of the user (for example, the static profile and click history of the user) or directly takes out an interest model of the user that is pre-extracted according to the personalized data of the user. The interest model may be an interest model vector composed of N-dimensional ranking scores of the user, where $N \geq 2$.

Step 2406: The application server carries the interest model of the user in the search request, and sends the search request to the search server.

Step 2408: The search server distributes the one or more search key words and the interest model to one or more member search devices. In this embodiment, the interest model of the user is carried in the search request, and the search request is distributed to the member search devices; a unified algorithm is specified for personalization of the search results. The unified algorithm may be specified by an algorithm ID.

Step 2410: The member search devices complete the search, calculate the ranking scores of the search results by using the specified unified personalized ranking algorithm, and sort the search results according to the ranking scores. In addition, the member search devices may filter the search results according to a preset threshold. For example, it is specified that up to 100 search results are returned.

Step 2412: The search server receives personalized search results and corresponding ranking scores from the member search devices.

Step 2414: The search server sorts the search results according to the returned ranking scores. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor).

Step 2416: The search server returns the sorted results to the application server.

Step 2418: The application server returns the search results to the search client. The returned search results in step 2416 and step 2418 may be filtered and include only search results with high relevance. Some search results are provided to the user. In this way, the network traffic is reduced, and the pressure on the search client is eased.

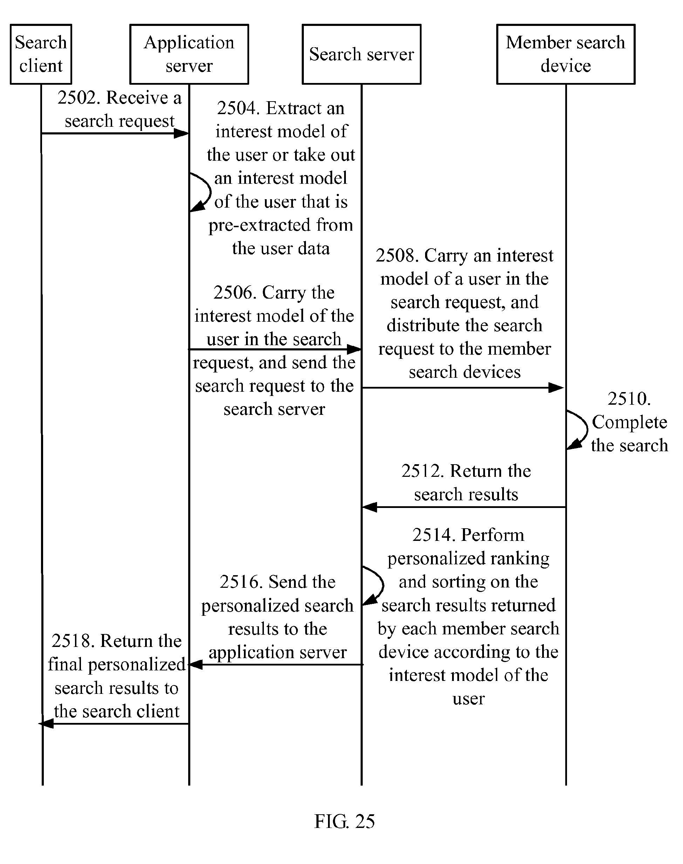

FIG. 25 is a flowchart of a search method in an embodiment of the present invention. In this embodiment, the search server distributes only the search request to the member search devices or the member search server. The method includes the following steps:

Step 2502: The search client sends a search request to the application server. The search request includes one or more search key words, and the search key words may be input by the user in text mode or speech mode. The search request may be a signal that the mobile terminal sends to the network.

Step 2504: The application server extracts an interest model of the user from the personalized data of the user (for example, the static profile and click history of the user) or directly takes out an interest model of the user that is pre-extracted according to the personalized data of the user. The interest model may be an interest model vector composed of N-dimensional ranking scores of the user, where $N \geq 2$.

Step 2506: The application server carries the interest model of the user in the search request, and sends the search request to the search server.

Step 2508: The search server distributes the one or more search key words to one or more member search devices or the member search server. The member search server may continue distributing the search key words to the lower-level engines. This is not further described.

Step 2510: The member search devices complete the search or the member search server completes the search.

Step 2512: The search server receives search results from the member search devices or the member search server.

Step 2514: The search server summarizes the search results, calculates the ranking scores of the search results according to the interest model of the user, and sorts the search results according to the ranking scores.

Step 2516: The search server returns the sorted results to the application server.

Step 2518: The application server returns the search results to the search client. The returned search results in step 2516 and step 2518 may be filtered and include only search results with high relevance. Some search results are provided to the user. In this way, the network traffic is reduced, and the pressure on the search client is eased.

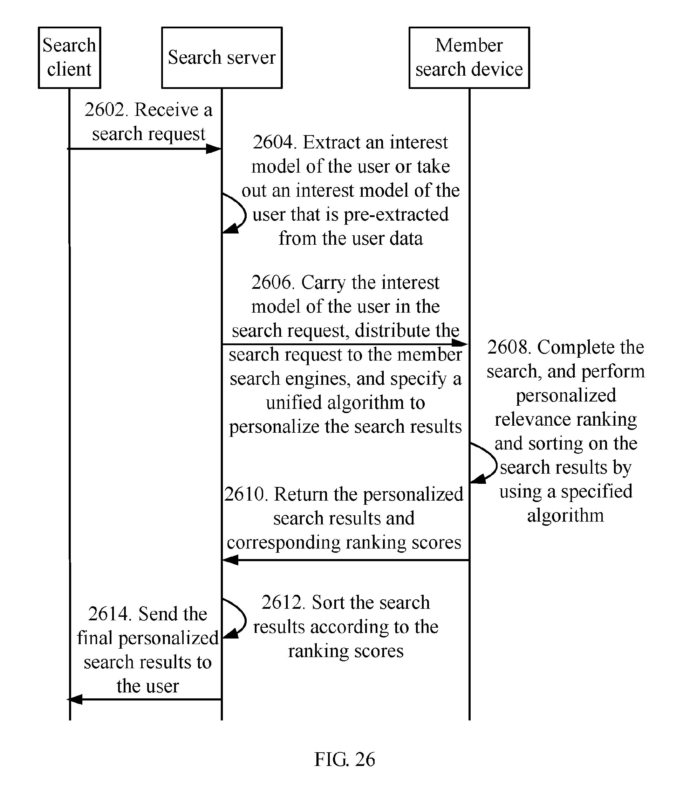

FIG. 26 is a flowchart of a search method in an embodiment of the present invention. In this embodiment, the search server extracts an interest model of the user or takes out a pre-stored interest model of the user, distributes a search request and the interest model to the member search devices, and specifies a unified personalized ranking algorithm. The method includes the following steps:

Step 2602: The search server receives a search request from the search client. The search request includes one or more search key words, and the search key words may be input by the user in text mode or speech mode. The search request may be a signal that the mobile terminal sends to the network.

Step 2604: The search server extracts an interest model of the user according to the personalized data of the user or takes out a pre-stored interest model of the user. In this embodiment, the personalized data of the user includes one or more of the following: static profile, search history, position information or presence information of the user. The interest model is an interest model vector composed of N-dimensional ranking scores of the user, where $N \geq 2$.

Step 2606: The search server distributes the one or more search key words and the interest model to one or more member search devices or the member search server. In this embodiment, the interest model of the user is carried in the search request, and the search request is distributed to the member search devices; a unified algorithm is specified for personalization of the search results. The unified algorithm may be specified by an algorithm ID.

Step 2608: The member search devices complete the search, calculate the ranking scores of the search results by using the specified personalized ranking algorithm, and sort the search results according to the ranking scores. In addition, the member search devices may filter the search results according to a preset threshold. For example, it is specified that up to 100 search results are returned.

Step 2610: The search server receives personalized search results and corresponding ranking scores from the member search devices.

Step 2612: The search server sorts the search results according to the returned ranking scores. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor).

Step 2614: The search server returns the final search results to the search client. The returned search results may be filtered and include only search results with high relevance. Some search results are provided to the user. In this way, the network traffic is reduced, and the pressure on the search client is eased.

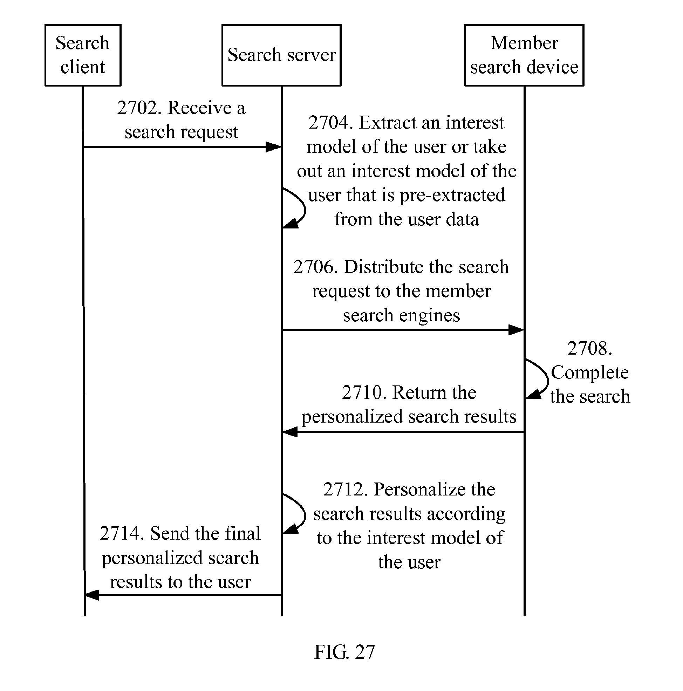

FIG. 27 is a flowchart of a search method in an embodiment of the present invention. In this embodiment, the search server distributes only the search request to the member search devices or the member search server. The method includes the following steps:

Step 2702: The search server receives a search request from the search client. The search request includes one or more search key words, and the search key words may be input by the user in text mode or speech mode. The search request may be a signal that the mobile terminal sends to the network.

Step 2704: The search server extracts an interest model of the user according to the personalized data of the user or takes out a pre-stored interest model of the user. In this embodiment, the personalized data of the user includes one or more of the following: static user profile, search history, position information or presence information. The interest model is an interest model vector composed of N-dimensional ranking scores of the user, where $N \geq 2$.

Step 2706: The search server distributes the one or more search key words to one or more member search devices or the member search server. The member search server may continue distributing the search key words to the lower-level engines. This is not further described.

Step 2708: The member search devices complete the search and/or the member search server completes the search.

Step 2710: The search server receives personalized search results from the member search devices.

Step 2712: The search server summarizes the search results, calculates the ranking scores of the search results according to the interest model of the user, and sorts the search results according to the ranking scores. For example, the search results with high relevance are sorted at front positions or after the search results of bidding rank. This enables the user to quickly browse desired search results with high relevance. In other embodiments, the sorting may be implemented according to the level ranking information of the member search devices and related factors (for example, a price factor).

Step 2714: The search server returns the final search results to the search client. The returned search results may be filtered and include only search results with high relevance. Some search results are provided to the user. In this way, the network traffic is reduced, and the pressure on the search client is eased.

For better understanding, the following describes the method with reference to a specific application example.

1. Define the interest model
The user interest is represented by n dimensions, for example, news, sports, entertainment, economics & finance, science & technology, real estate, games, women, forum, weather, commodities, electrical appliances, music, book, blog, mobile phone, military, education, tourism, multimedia message, ring back tone, catering, civil aviation, industry, agriculture, PC, and geography. The vector composed of ranking scores of the user interests in each dimension, that is, W (r1, r2, r3, ..., rn), is the interest model of the user.

2. The search server extracts an interest model from the user data.

(1) Interest model W1 corresponding to the static user profile
W1 = (p1, p2, p3, ..., pn), where pi refers to the sum of word frequencies of all the words that belong to the $i^{th}$ interest dimension.
(2) Interest model W2 corresponding to the search history of the user
W2 = d1 + d2 + d3 + ... + dm, where di refers to the interest model vector corresponding to a document clicked by the user; and

$$di = (t1, t2, t3, \ldots, tn).$$

When the user clicks this document, tj is equal to the sum of word frequencies of all the words that belong to the jth interest dimension in the document. When the user evaluates a document clicked by the user, if the evaluation result is good, the di vector is multiplied by a positive constant c, indicating that the importance of the document is increased, that is, di = c x di = (c x t1, c x t2, c x t3, ..., c x tn); if the evaluation result is bad, the di vector is multiplied by a reciprocal of the positive constant c, indicating that the importance of the document is decreased, that is, di = 1/c x di = (1/c x t1, 1/c x t2, 1/c x t3, ..., 1/c x tn).

After a period of time, the value of tj is automatically reduced by a certain percentage, indicating that the importance of the document is decreased over the time. If the value of tj is reduced to zero after a long period of time, di is deleted from the history record. For example, the value of tj is reduced by 10% after a month.

(3)

$$\text{Overall interest model } W = W1 + W2$$

3. The search server carries the extracted interest model data in a personalized search request, and sends the personalized search request to one or more member search devices, and instructs multiple member search devices to personalize the search results by using a specified personalized algorithm.

4. A member search device performs personalized search by using the specified personalized algorithm.

(1) The member search device searches for candidate result documents according to an inverted index.

(2) The member search device performs personalized relevance ranking and sorting on the candidate result documents according to the interest model data and the specified personalized algorithm.

Algorithm (a): W = (r1, r2, r3, ..., rn) refers to the interest model vector sent from the meta search engine; D = (t1, t2, t3, ..., tn) refers to the interest model vector corresponding to the documents.

$$\text{Ranking score} = W \text{ x } D = r1 \text{ x } t1 + r2 \text{ x } t2 + r3 \text{ x } t3 + \ldots + rn \text{ x } tn$$

or

Algorithm (b): W = (r1, r2, r3, ..., rn) refers to the interest model vector sent from the search server.

General document classification algorithms such as Knn and Cvm are used to classify the documents; if a classified result document belongs to type C, type C is matched with the type of each dimension of the interest model, and ranking score ri corresponding to a dimension i that matches the document type is assigned to the document.

$$\text{Ranking score} = ri$$

(3) The member search device returns n most relevant documents (with highest ranking scores) and personalized relevance ranking scores of the documents.

5. The search server performs overall relevance sorting on the personalized search results from each member search device according to the relevance ranking scores calculated by a unified algorithm, and returns the most relevant results to the search client.

It is understandable to those skilled in the art that all or part of the steps of the foregoing embodiments may be implemented by hardware instructed by a program. The program may enable one or more computer processors to execute the foregoing methods. In addition, the program may be stored in a computer readable storage medium, for example, a ROM, a RAM, or a CD-ROM.

In embodiments of the present invention, search results are obtained according to the interest model that is extracted according to the personalized data of the user and the search request. In this way, the search results better satisfy the user requirements, and different users may obtain different search results, thus personalizing the search results and facilitating the promotion of search services. In addition, the member search devices perform personalized ranking, so that the member search devices can return the most relevant search results and that the search server can obtain more accurate search results. Each member search device personalizes the search results by using a unified algorithm, so that the ranking scores returned by each member search device are comparable. In this way, the network traffic is greatly reduced, and the personalized efficiency is improved.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall within the scope of protection defined by the following claims or their equivalents.

**Claims**

1. A search method, which provides a search client user with personalized search that may provide related search results according to an interest model of the search client user, comprising:

   receiving a search request from a search client, wherein the search request comprises one or more search key words;
   extracting an interest model of a user according to personalized data of the user;
   distributing the one or more search key words and the interest model to one or more member search devices;
   receiving search results and corresponding ranking scores of the search results from the one or more member search devices, wherein the ranking scores are calculated according to the interest model; and
   obtaining final search results by sorting the search results according to the ranking scores, and returning the final search results to the search client.

2. The search method of claim 1, wherein the personalized data of the user comprises one or more of the following: static user profile, search history, position information or presence information.

3. The search method of claim 1, wherein the interest model is an interest model vector composed of N-dimensional ranking scores of the user, wherein $N \geq 2$.

4. The search method of claim 3, wherein the interest model vector is a sum of vectors of one or more static interest models and vectors of one or more dynamic interest models or a weighted sum of vectors of one or more static interest models and vectors of one or more dynamic interest models.

5. The search method of claim 4, further comprising: normalizing the interest model vector.

6. The search method of claim 4, wherein the vectors of the one or more static interest models, the vectors of the one or more dynamic interest models or the interest model vector may be represented as follows: $W1 = (p1, p2, ..., pi, ..., pn)$, wherein W1 refers to a vector, pi refers to a sum of word frequencies of an $i^{th}$ interest dimension, and n is greater than or equal to 2.

7. The search method of claim 6, wherein the pi value may vary with history search time or vary according to user evaluation.

8. The search method of claim 1, further comprising: filtering the search results according to a preset threshold, wherein the step of sending the final search results to the search client comprises: sending the filtered final search results to the search client.

9. The search method of claim 1, further comprising: specifying a unified ranking algorithm for the one or more member search devices, and sending the algorithm ID of the unified ranking algorithm to the one or more member search devices.

10. A search method, comprising:

    receiving a search request from a search client, wherein the search request comprises one or more search key words and a user ID;
    distributing the one or more search key words and the user ID to one or more member search devices;
    receiving search results from the one or more member search devices, wherein the search results are obtained by the one or more member search devices according to an interest model that is extracted according to personalized data of a user; and
    sending the search results to the search client.

11. The search method of claim 10, wherein the personalized data of the user comprises one or more of the following: static user profile, search history, position information or presence information.

12. The search method of claim 10, wherein the interest model is an interest model vector composed of N-dimensional ranking scores of the user, wherein $N \geq 2$.

**13.** The search method of claim 12, wherein the interest model vector is a sum of vectors of one or more static interest models and vectors of one or more dynamic interest models or a weighted sum of vectors of one or more static interest models and vectors of one or more dynamic interest models.

**14.** The search method of claim 13, wherein the vectors of the one or more static interest models, the vectors of the one or more dynamic interest models or the interest model vector may be represented as follows: W1 = (p1, p2, ..., pi, ..., pn), wherein W1 refers to a vector, pi refers to a sum of word frequencies of an $i^{th}$ interest dimension, and n is greater than or equal to 2.

**15.** The search method of claim 14, wherein the pi value may vary with history search time or vary according to user evaluation.

**16.** The search method of claim 10, further comprising: filtering the search results according to the ranking scores, wherein the step of sending the final search results to the search client comprises: sending the filtered search results to the search client.

**17.** A search method, comprising:

receiving a search request that comprises one or more key words;
searching according to the one or more key words;
ranking and sorting search results according to an interest model that is extracted according to personalized data of a user; and
returning the sorted search results.

**18.** The search method of claim 17, further comprising: calculating ranking scores of the search results according to the interest model, and filtering the search results according to the ranking scores, wherein the step of returning the sorted search results comprises: returning filtered search results to a search client.

**19.** The search method of claim 18, wherein the step of calculating the ranking scores of the search results according to the interest model comprises: obtaining the ranking scores through point multiplication of an interest model vector and vectors extracted from documents in the search results.

**20.** The search method of claim 19, further comprising: normalizing the interest model vector or the vectors of the documents in the search results.

**21.** A search method, comprising:

receiving a search request from a search client, wherein the search request comprises one or more search key words;
distributing the one or more search key words to a search device;
receiving search results returned by the search device;
extracting an interest model of a user according to personalized data of the user, and calculating ranking scores of the search results according to the interest model;
sorting the search results according to the ranking scores; and
sending the sorted search results to the search client.

**22.** The search method of claim 21, wherein the personalized data of the user comprises one or more of the following: static user profile, search history, position information or presence information.

**23.** The search method of claim 21, further comprising: filtering the search results according to the ranking scores, wherein the step of sending the sorted search results to the search client comprises: sending the filtered search results to the search client.

**24.** A computer readable storage medium, comprising a computer program that enables one or more processors to execute the following steps when the computer program runs:

receiving a search request from a search client, wherein the search request comprises one or more search key words;

extracting an interest model of a user according to personalized data of the user;
searching according to the one or more search key words, and performing relevance sorting on search results according to the interest model; and
sending the search results that undergo the relevance sorting to the search client.

25. A search device, comprising:

a tool adapted to receive a search request;
a tool adapted to extract an interest model of a user according to personalized data of the user;
a tool adapted to distribute the request and the interest model to member search devices;
a tool adapted to receive search results and ranking scores of the search results from the member search devices;
a tool adapted to sort the search results according to the ranking scores; and
a tool adapted to return the search results to a search client.

26. A search device, comprising:

a tool adapted to receive a search request from a search client;
a tool adapted to extract an interest model of a user according to personalized data of the user;
a tool adapted to rank and sort the obtained search results according to the interest model; and
a tool adapted to send the search results to the search client.

27. The search device of claim 26, further comprising:

a tool adapted to filter the search results according to the search results and the interest model.

28. The search device of claim 26, further comprising:

a tool adapted to distribute the search request to other search devices.

29. The search device of claim 26, implemented on the basis of a search system, wherein the search system comprises: one or more member search devices adapted to return the search results to the search device according to the search request.

30. A search device, comprising:

a tool adapted to receive a search request;
a tool adapted to obtain search results according to an interest model that is extracted according to personalized data of a user and the search request; and
a tool adapted to return the search results.

31. The search device of claim 30, further comprising a tool adapted to filter the search results according to the search results and the interest model.

32. The search device of claim 30, implemented on the basis of a search system, wherein the search system further comprises a tool adapted to distribute the search request to the search device.

33. A search system, comprising a search server that may establish search communications with one or more member search devices, wherein: the search server is adapted to: receive a search request from a search client, distribute the search request to the one or more member search devices, and receive search results returned by the one or more member search devices; the one or more member search devices are adapted to obtain the search results according to the search request; and the search server or the one or more member search devices may also be configured to: extract an interest model according to user data, calculate ranking scores of the search results according to the interest model, and perform relevance sorting on the search results.

34. The search system of claim 33, wherein the search server or the one or more member search devices may also be configured to filter the search results according to the ranking scores.

35. The search system of claim 33, wherein the search server may also be configured to specify a unified ranking algorithm for the one or more member search devices and distribute an ID of the unified ranking algorithm to the one or more member search devices.

36. A search system, comprising a search server that may establish search communications with one or more member search devices, wherein: the search server is adapted to: receive a search request from a search client, extract an interest model of a user according to personalized data of the user, distribute the search request and the interest model to the one or more member search devices, receive search results and ranking scores of the search results returned by the one or more member search devices, sort the search results according to the ranking scores, and return the sorted search results to the search client; and the one or more member search devices are adapted to obtain the search results according to the search request, and calculate the ranking scores of the search results according to the interest model.

37. The search system of claim 36, wherein the search server may be further configured to filter the search results according to the ranking scores and a preset threshold and return filtered search results to the search client.

38. A search method, comprising:

   receiving a search request that comprises one or more search key words;
   distributing the one or more search key words to a search device;
   after returning search results, sorting the search results according to ranking scores of the search results that are calculated by using an interest model of a user extracted according to personalized data of the user; and
   returning the sorted search results.

39. The search method of claim 38, wherein the step of receiving the search request comprises: receiving a search request from a search client or receiving a search request sent from an application server.

40. The search method of claim 38 or 39, wherein the step of distributing the one or more search key words to the search device comprises: distributing the one or more key words to a search server, member search devices or a member search server.

41. The search method of claim 38 or 39, wherein the step of distributing the one or more search key words to the search device comprises: distributing the one or more search key words and the interest model of the user to member search devices, a member search server or a search server.

42. The search method of claim 41, wherein the step of distributing the one or more search key words and the interest model of the user to the member search devices or the member search server comprises: specifying a unified algorithm for personalization of the search results.

43. The search method of claim 42, wherein the step of specifying the unified algorithm for personalization of the search results comprises: distributing a unified ranking algorithm ID.

44. The search method of claim 42, further comprising: receiving personalized relevance ranking scores of the search results that are calculated according to the unified algorithm from the search device.

45. The search method of claim 44, further comprising: receiving search results that are sorted according to the personalized relevance ranking scores from the search device.

46. The search method of claim 44, further comprising: re-ranking the search results according to the personalized relevance ranking scores and related factors, and sorting the search results according to the re-ranking scores, wherein the step of returning the sorted search results comprises: returning the results sorted according to the re-ranking scores.

47. The search method of claim 46, wherein the related factors comprise level information of the member search devices or the member search server and/or price ranking information.

48. The search method of claim 41, further comprising: receiving personalized relevance ranking scores of the search results that are calculated according to a private algorithm from the search device.

**49.** The search method of claim 48, further comprising: receiving search results that are sorted according to the personalized relevance ranking scores from the search device.

**50.** The search method of claim 48, further comprising: re-ranking the search results according to the personalized relevance scores and related factors, and sorting the search results according to the re-ranking scores.

**51.** The search method of claim 50, wherein the related factors comprise level information of the member search devices, wherein the step of re-ranking the search results according to the level information of the member search devices or the member search server comprises: calculating level ranking information by using the following formula:

$$P = r1 \text{ x returned ranking scores} + r2 \text{ x level factor}$$

wherein P refers to a level ranking score, r1 refers to the weight of a returned ranking score, r2 refers to the weight of a level factor, the returned ranking scores refer to the ranking scores returned by the member search devices, and the level factors refer to levels of the member search devices.

**52.** The search method of claim 51, wherein the step of re-ranking the search results according to the level information of the member search devices or the member search server comprises: calculating overall ranking information by using the following formula:

$$R = P + r3 \text{ x price factor ranking score}$$

wherein R refers to an overall ranking score, r3 refers to the ranking weight of a price factor, and r1 + r2 + r3 = 1.

**53.** The search method of claim 38, further comprising: extracting, by an application server, a search server, a member search server, or member search devices, the interest model of the user according to the personalized data of the user.

**54.** The search method of claim 38, wherein the interest model is an interest model vector composed of N-dimensional ranking scores of the user, wherein $N \geq 2$.

**55.** The search method of claim 38 or 54, wherein the interest model vector is a sum of vectors of one or more static interest models and vectors of one or more dynamic interest models or a weighted sum of vectors of one or more static interest models and vectors of one or more dynamic interest models.

**56.** The search method of claim 55, wherein the vectors of the one or more static interest models, the vectors of the one or more dynamic interest models or the interest model vector may be represented as follows: W1 = (p1, p2, ..., pi, ..., pn), wherein W1 refers to a vector, pi refers to a sum of word frequencies of an $i^{th}$ interest dimension, and n is greater than or equal to 2.

**57.** The search method of claim 56, wherein the pi value may vary with history search time or vary according to user evaluation.

**58.** The search method of claim 55, further comprising: normalizing the interest model vector.

**59.** The search method of claim 38, wherein the interest model comprises the personalized data of the user, wherein the personalized data of the user comprises one or more of the following: static user profile, search history, position information or presence information.

**60.** A search method, comprising:

receiving a search request;
carrying an interest model of a user in the search request, and distributing the search request to a search device; and
receiving personalized search results that are obtained according to the interest model from the search device, and returning the personalized search results.

61. The search method of claim 60, wherein the search request comprises search key words input in text mode and/or search key words recognized in speech mode.

62. The search method of claim 60, further comprising: receiving an interest model of the user extracted according to personalized data of the user or a pre-extracted interest model of the user from an application server.

63. The search method of claim 60, wherein the step of carrying the interest model of the user in the search request and distributing the search request to the search device further comprises: specifying a unified algorithm for personalization of the search results.

64. The search method of claim 63, further comprising: receiving personalized ranking scores of the search results that are calculated according to the unified algorithm from the search device.

65. The search method of claim 64, further comprising: receiving search results that are sorted according to the personalized ranking scores from the search device.

66. The search method of claim 60, further comprising: re-ranking the search results according to the personalized relevance scores and/or related factors, and sorting the search results according to the re-ranking scores.

67. The search method of claim 66, wherein the related factors comprise the level information of member search devices or a member search server and/or price ranking information.

68. The search method of claim 67, wherein the step of re-ranking the search results according to the level information of the member search devices or the member search server comprises: calculating level ranking information by using the following formula:

$$P = r1 \times \text{returned ranking scores} + r2 \times \text{level factor}$$

wherein P refers to a level ranking score, r1 refers to the weight of a returned ranking score, r2 refers to the weight of a level factor, the returned ranking scores refer to the ranking scores returned by the member search devices, and the level factors refer to levels of the member search devices.

69. The search method of claim 68, wherein the step of re-ranking the search results according to the level information of the member search devices or the member search server comprises: calculating overall ranking information by using the following formula:

$$R = P + r3 \times \text{price factor ranking score}$$

wherein R refers to an overall ranking score, r3 refers to the ranking weight of a price factor, and r1 + r2 + r3 = 1 .

70. The search method of claim 60, further comprising: receiving personalized relevance ranking scores of the search results that are calculated according to a private algorithm from the search device.

71. The search method of claim 70, further comprising: receiving search results that are sorted according to the personalized relevance ranking scores from the search device.

72. A search method, comprising:

receiving a search request from a search client;
extracting an interest model of a user according to personalized data of the user or taking out a pre-stored interest model of the user;
carrying the interest model of the user in the search request, and sending the search request to a search server;

receiving personalized search results obtained according to the interest model of the user from the search server; and

returning the personalized search results to the search client.

**73.** The search method of claim 72, wherein the interest model is an interest model vector composed of N-dimensional ranking scores of the user, wherein N ≥ 2.

**74.** The search method of claim 72 or 73, wherein the interest model vector is a sum of vectors of one or more static interest models and vectors of one or more dynamic interest models or a weighted sum of vectors of one or more static interest models and vectors of one or more dynamic interest models.

**75.** The search method of claim 74, wherein the vectors of the one or more static interest models, the vectors of the one or more dynamic interest models or the interest model vector may be represented as follows: W1 = (p1, p2, ..., pi, ..., pn), wherein W1 refers to a vector, pi refers to a sum of word frequencies of an $i^{th}$ interest dimension, and n is greater than or equal to 2.

**76.** The search method of claim 75, wherein the pi value may vary with history search time or vary according to user evaluation.

**77.** The search method of claim 72, wherein the interest model comprises the personalized data of the user, wherein the personalized data of the user comprises one or more of the following: static user profile, search history, position information or presence information.

**78.** A search method, comprising:

receiving a search request that carries an interest model of a user;
obtaining search results according to the search request;
personalizing the search results according to the interest model of the user; and
returning the personalized search results.

**79.** The search method of claim 78, further comprising: receiving a specified algorithm, and calculating ranking scores of the search results according to the specified algorithm and the interest model of the user.

**80.** The search method of claim 79, further comprising: sorting the search results according to the ranking scores, wherein the step of returning the personalized search results comprises: returning the sorted search results.

**81.** The search method of claim 79 or 80, further comprising: returning the ranking scores.

**82.** The search method of claim 79, wherein the step of receiving the specified algorithm comprises: receiving a specified algorithm ID, and determining the algorithm according to the algorithm ID.

**83.** The search method of claim 78, further comprising: calculating ranking scores of the search results by using a private algorithm.

**84.** The search method of claim 83, further comprising: sorting the search results according to the ranking scores, wherein the step of returning the personalized search results comprises: returning the sorted search results.

**85.** The search method of claim 84, further comprising: returning the ranking scores.

**86.** A search device, comprising:

a tool adapted to receive a search request;
a tool adapted to distribute the search request to search devices;
a tool adapted to receive search results returned by the search devices;
a tool adapted to calculate ranking scores of the search results according to an interest model of a user that is extracted according to personalized data of the user;
a tool adapted to sort the search results according to the ranking scores; and
a tool adapted to return the sorted search results.

87. The search device of claim 86, further comprising:

a tool adapted to re-rank the search results according to personalized relevance ranking scores and related factors; and
a tool adapted to sort the search results according to the re-ranking scores.

88. The search device of claim 87, wherein the tool adapted to re-rank the search results according to the personalized relevance ranking scores and the related factors further comprises a tool adapted to calculate level ranking information by using the following formula:

$$P = r1 \text{ x returned ranking scores} + r2 \text{ x level factor}$$

wherein P refers to a level ranking score, r1 refers to the weight of a returned ranking score, r2 refers to the weight of a level factor, the returned ranking scores refer to the ranking scores returned by member search devices, and the level factors refer to levels of the member search devices.

89. The search device of claim 88, wherein the tool adapted to re-rank the search results according to the personalized relevance ranking scores and the related factors further comprises a tool adapted to calculate overall ranking information by using the following formula:

$$R = P + r3 \text{ x price factor ranking score}$$

wherein R refers to an overall ranking score, r3 refers to the ranking weight of a price factor, and r1 + r2 + r3 = 1.

90. A search device, comprising:

a tool adapted to receive a search request;
a tool adapted to carry an interest model of a user in the search request, and distribute the search request to a search device;
a tool adapted to receive personalized search results obtained according to the interest model from the search device; and
a tool adapted to return the personalized search results.

91. A search device, comprising:

a tool adapted to receive a search request from a search client;
a tool adapted to extract an interest model of a user according to personalized data of the user or take out a pre-stored interest model of the user;
a tool adapted to carry the interest model of the user in the search request, and send the search request to a search server;
a tool adapted to receive personalized search results obtained according to the interest model of the user from the search server; and
a tool adapted to return the personalized search results to the search client.

92. A search device, comprising:

a search request receiving module, adapted to receive a search request and an interest model of a user;
a search processing module, adapted to obtain search results according to the search request;
a search result personalizing module, adapted to personalize the search results according to the interest model of the user; and
a search result returning module, adapted to return the personalized search results.

93. A search system, comprising a search server that may establish search communications with one or more member search devices, wherein:

the search server is adapted to: receive a search request, carry an interest model of a user in the search request, and distribute the search request to the one or more member search devices;

the one or more member search devices are adapted to: obtain search results according to the search request, calculate ranking scores of the search results according to the interest model of the user, and return the ranking scores to the search server; and

the search server is adapted to: receive personalized search results obtained according to the interest model from the one or more member search devices, and return the personalized search results.

94. The search system of claim 93, further comprising: an application server adapted to extract the interest model of the user according to the personalized data of the user or take out a pre-stored interest model of the user, and send the interest model to the search server.

95. The search system of claim 94, wherein the search server is further adapted to:

re-rank the search results according to the personalized relevance scores and related factors, and sort the search results according to the re-ranking scores.

96. The search system of claim 95, wherein the related factors comprise level information of the member search devices or a member search server and/or price ranking information.

97. The search system of claim 95, wherein the re-ranking comprises: calculating level ranking information by using the following formula:

$$P = r1 \times \text{returned ranking scores} + r2 \times \text{level factor}$$

wherein P refers to a level ranking score, r1 refers to the weight of a returned ranking score, r2 refers to the weight of a level factor, the returned ranking scores refer to the ranking scores returned by the member search devices, and the level factors refer to levels of the member search devices.

98. The search system of claim 97, wherein the re-ranking comprises: calculating overall ranking information by using the following formula:

$$R = P + r3 \times \text{price factor ranking score}$$

wherein R refers to an overall ranking score, r3 refers to the ranking weight of a price factor, and r1 + r2 + r3 = 1.

99. The search system of claim 93, wherein the one or more member search devices comprise a member search server connected to lower-level member engines.

<u>100</u>

┌─────────────┐ 106
│ User data   │
│storage device│
└─────────────┘

                            ┌──────────────┐ 108
                            │   Member     │
                            │   search     │
                            │   device     │
                            └──────────────┘

102                                         108
┌─────────┐      ┌──────────────┐      ┌──────────────┐
│ Search  │      │Search server │ 104  │   Member     │
│ client  │      │              │      │   search     │
└─────────┘      └──────────────┘      │   device     │
                                        └──────────────┘

                            ┌──────────────┐ 108
                            │   Member     │
                            │   search     │
                            │   device     │
                            └──────────────┘

FIG. 1

FIG. 2

300

308

Member search device

308

302

304

Member search device

306

Search client

Search server

User data storage device

308

Member search device

FIG. 3

<u>400</u>

┌─ 304 ──────────────────────┐   ┌─ 308 ─────────────────────────┐
│        Search server        │   │      Member search device      │

**304** **308**

**Search server**

**402** **404**

| Search request receiving module | Personalized search request distributing module |

**406** **408**

**Member search device**

| Personalized search request receiving module | Search processing module |

**41 8** **41 6**

| Final search result returning module | Personalized search result sorting module |

**414** **412**

| Personalized search result returning module | Search result personalizin g module |

**410**

| Interest model extracting module |

FIG. 4

500

506

User data
storage
device

508

Member
search
device

502

Search
client

504

Search
server

508

Member
search
device

508

Member
search
device

FIG. 5

600

504

Search server

602
Search request receiving module

604
Search request distributing module

616
Final search result returning module

614
Personalized search result sorting module

612
Interest model extracting module

508

Member search device

606
Search request receiving module

608
Search processing module

610
Search result returning module

FIG. 6

| Search client | Search server | Member search device |
|---|---|---|

702. Receive a search request

704. Extract an interest model of a user

706. Carry the interest model of the user in the search request, distribute the search request to the member search devices, and personalize the search results by using a unified algorithm

708. Complete the search, and calculate the ranking scores of the search results by using the interest model and the specified algorithm sent from the search server

710. Return the personalized search results and corresponding ranking scores

712. Perform overall personalized relevance sorting on the search results returned from each member search device according to the ranking scores of the search results

714. Send the final personalized search results to the user

FIG. 7

| Search client | Search server | Member search device |
|---|---|---|

802. Receive a search request

804. Carry the interest model of the user in the search request, send the search request to the member search devices, and personalize the search results by using a unified algorithm

806. Access the user data, and extract the interest model of the user

810. Return the personalized search results and corresponding ranking scores

808. Complete the search, and calculate the ranking scores of the search results according to the interest model and the unified algorithm

814. Send the final personalized search results to the user

812. Perform overall personalized relevance sorting on the search results returned from each member search device according to the ranking scores of the search results

FIG. 8

Search client

Search server

Member search device

902. Receive a search request

904. Distribute the search request to the member search engines

906. Obtain search results according to the key words

908. Return the search results

912. Send the final personalized search results to the user

910. Summarize the search results, calculate the ranking scores of the search results according to the interest model of the user, and sort the search results according to the ranking scores

FIG. 9

1000

1006

User data
storage device

1008

Member
search
device

Specify a unified
personalized ranking
algorithm by using the
interest model of the user

Personalized results
and ranking scores

1004

1002

Search
client

Search server
(perform
personalized
ranking and sorting)

1008

Member
search
device

1010

Member
search
server

1012

Lower-
level
member
engine

1012

Lower-
level
member
engine

1012

Lower-
level
member
engine

FIG. 10

1100

1004

Search server

Interest model extracting module — 1104

1102

Search request receiving module — 1102

1106

Search request distributing module — 1106

1008

Member search device

Search request receiving module — 1108

Search processing module — 1110

1118

Final search result returning module — 1118

1116

Personalized search result sorting module — 1116

1114

Search result returning module — 1114

1112

Search result personalizing module — 1112

FIG. 11

1200

1206
User data
storage
device

1208
Member
search
device

Search request

Search results

1204
1202
Search
client

Search server
(perform
personalized
ranking and
sorting)

1208
Member
search
device

1212
Lower-
level
member
engine

1210
Member
search
server

1212
Lower-
level
member
engine

1212
Lower-
level
member
engine

FIG. 12

1300

1204

Search server

┌─ 1302

Search
request
receiving
module

1304 ─┐

Search
request
distributing
module

┌ 1316

Final search
result
returning
module

┌─ 1314

Personalized
search result
sorting
module

┌ 1312

Interest
model
extracting
module

1208

Member search device

┌ 1306

Search
request
receiving
module

┌ 1308

Search
processing
module

┌ 1310

Search
result
returning
module

FIG. 13

<u>1400</u>

FIG. 14

1500

1404

Search server

Interest
model
extracting
module
—1504

1502
1506

Search
request
receiving
module

Search
request
distributing
module

1408

Member search device

1508

Search
request
receiving
module

1510

Search
processing
module

1516

Re-ranking
module

1514

Search
result
returning
module

1512

Search result
personalizing
module

1520

Final search
result
returning
module

1518

Personalized
search result
sorting
module

FIG. 15

FIG. 16

FIG. 17

1800

User data storage device — 1804

Search client — 1802

Application server — 1806

Search server (perform personalized re-ranking and sorting) — 1808

Specify a unified personalized ranking algorithm by using the interest model of the user

personalized results and ranking scores

Member search device — 1810

Member search device — 1810

Member search server — 1812

Lower-level member engine — 1814

Lower-level member engine — 1814

Lower-level member engine — 1814

FIG. 18

FIG. 19

FIG. 20

FIG. 21

```
┌─────────┐      ┌─────────────────┐           ┌─────────────────┐
│ Search  │      │  Search server  │           │     Member      │
│ client  │      │                 │           │ search device   │
└─────────┘      └─────────────────┘           └─────────────────┘
```

2202. Receive a search request

2204. Extract an interest model of the user or take out an interest model of the user that is pre-extracted from the user data

2206. Carry the interest model of the user in the search request, distribute the search request to the member search devices, and specify a unified algorithm to personalize the search results

2208. Complete the search, and perform personalized relevance ranking and sorting on the search results by using a specified algorithm or a private algorithm (if there is no specified algorithm)

2210. Return the personalized search results and corresponding ranking scores

2212. Re-rank the search results returned by each member search device according to the ranking scores of the search results and related factors (for example, the level of the member engine or price factor)

2214. Sort the search results according to the ranking scores

2216. Send the final personalized search results to the user

FIG. 22

53

Search client | Application server | Search server | Member search device

2302. Receive a search request

2304. Extract an interest model of the user or take out an interest model of the user that is pre-extracted from the user data

2306. Carry the interest model of the user in the search request, and send the search request to the search server

2308. Carry the interest model of the user in the search request, distribute the search request to the member search devices, and specify a unified algorithm to personalize the search results

2310. Complete the search, and perform personalized relevance ranking and sorting on the search results by using a specified algorithm or a private algorithm (if there is no specified algorithm)

2312. Return the personalized search results and corresponding ranking scores

2314. Re-rank the search results returned by each member search device according to the ranking scores of the search results and related factors (for example, the level of the member engine or price factor)

2316. Sort the search results according to the ranking scores

2318. Send the personalized search results to the application server

2320. Return the final personalized search results to the search client

FIG. 23

| Search client | Application server | Search server | Member search device |
|---|---|---|---|

2402. Receive a search request → 2404. Extract an interest model of the user or take out an interest model of the user that is pre-extracted from the user data

2408. Carry the interest model of the user in the search request, distribute the search request to the member search devices, and personalize the search results by using a unified algorithm

2406. Carry the interest model of the user in the search request, and send the search request to the search server →

2410. Complete the search, and perform personalized relevance ranking and sorting on the search results by using a specified algorithm

2412. Return the personalized search results and corresponding ranking scores

2414. Sort the search results according to the returned ranking scores

2416. Send the personalized search results to the application server

2418. Return the final personalized search results to the search client

FIG. 24

| Search client | Application server | Search server | Member search device |
|---|---|---|---|

2502. Receive a search request

2504. Extract an interest model of the user or take out an interest model of the user that is pre-extracted from the user data

2506. Carry the interest model of the user in the search request, and send the search request to the search server

2508. Carry an interest model of a user in the search request, and distribute the search request to the member search devices

2510. Complete the search

2512. Return the search results

2514. Perform personalized ranking and sorting on the search results returned by each member search device according to the interest model of the user

2516. Send the personalized search results to the application server

2518. Return the final personalized search results to the search client

FIG. 25

| Search client | Search server | | Member search device |
|---|---|---|---|

2602. Receive a search request

2604. Extract an interest model of the user or take out an interest model of the user that is pre-extracted from the user data

2606. Carry the interest model of the user in the search request, distribute the search request to the member search engines, and specify a unified algorithm to personalize the search results

2608. Complete the search, and perform personalized relevance ranking and sorting on the search results by using a specified algorithm

2610. Return the personalized search results and corresponding ranking scores

2614. Send the final personalized search results to the user

2612. Sort the search results according to the ranking scores

FIG. 26

Search client

Search server

Member search device

2702. Receive a search request

2704. Extract an interest model of the user or take out an interest model of the user that is pre-extracted from the user data

2706. Distribute the search request to the member search engines

2708. Complete the search

2710. Return the personalized search results

2712. Personalize the search results according to the interest model of the user

2714. Send the final personalized search results to the user

FIG. 27

# INTERNATIONAL SEARCH REPORT

| International application No. |
|---|
| PCT/CN2009/073534 |

**A. CLASSIFICATION OF SUBJECT MATTER**

G06F17/30 (2006.01) i

According to International Patent Classification (IPC) or to both national classification and IPC

**B. FIELDS SEARCHED**

Minimum documentation searched (classification system followed by classification symbols)

IPC: G06F 17/-

Documentation searched other than minimum documentation to the extent that such documents are included in the fields searched

Electronic data base consulted during the international search (name of data base and, where practicable, search terms used) WPI EPODOC PAJ CNPAT CNKI: SEARCH+, RETRIEV+, INTEREST+, CUSTOMIZ+, PERSONAL, REGISTR+ W INFORMATION, NETWORK?, MODEL?, VECTOR, WEIGHT, SCOR+, SORT+, CLIENT?, USER?, SERVER?, SEND+, RECEIV+, NORMALIZ+

**C. DOCUMENTS CONSIDERED TO BE RELEVANT**

| Category* | Citation of document, with indication, where appropriate, of the relevant | Relevant to claim No. |
|---|---|---|
| X | CN1811780A (CHINA MOBILE COMMUNICATION GROUP COR) 02 Aug.2006 (02.08.2006) description page 4 line 3- page 6 line 9 | 10-11,24,30,32,60-63,72,74,77-78,83,90-92 |
| Y | | 1-9,12-23,25-29,31,33-45,48-49,53-59,64-65,73,75-76,79-82,84-86,93-94,99 |
| A | | 46-47,50-52,66-71,87-89,95-98 |
| Y | YANG Xianfeng Research on the Technology of Personalized Information Retrieval in Search Engine 31 Dec.2007(31.12.2007) page 17 lines 19-24, page 48 lines 23-25, Fig 4-1 | 1-9,12-23,25-29,31,33-45,48-49,53-59,64-65,73,75-76,79-82,84-86,93-94,99 |
| A | | 46-47,50-52,66-71,87-89,95-98 |
| A | US2008114756A1 (LEVINO, PERSONALIZED USER MODEL) 15 May.2008 (15.05.2008) the whole document | 1-99 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 16 Nov. 2009(16.11.2009) | **10 Dec. 2009 (10.12.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **HAN,Yan** Telephone No. (86-10)62411764 |
|---|---|

Form PCT/ISA /210 (second sheet) (July 2009)

## INTERNATIONAL SEARCH REPORT
Information on patent family members

| International application No. |
| --- |
| PCT/CN2009/073534 |

| Patent Documents referred in the Report | Publication Date | Patent Family | Publication Date |
| --- | --- | --- | --- |
| CN1811780A | 02.08.2006 | CN100421113C | 24.09.2008 |
| | | WO2007098710A1 | 07.09.2007 |
| US2008114756A1 | 15.05.2008 | US6981040B1 | 27.12.2005 |
| | | US2006136589A1 | 22.06.2006 |
| | | US7320031B2 | 15.01.2008 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810142177X
- CN 200810187004X
- WO 200810187020 A
- CN 200810187019
- CN 200810187049